# EUROPEAN PATENT SPECIFICATION

(11) **EP 4 476 790 B1**
(45) Date of publication and mention of the grant of the patent: **22.07.2026**
(21) Application number: 22705530.8
(22) Date of filing: 09.02.2022
(51) Int. Cl.: H01M 10/613, H01M 10/625, H01M 10/647, H01M 10/6556, F28D 1/053, F28F 1/02, F28F 3/12

(54) **HEAT EXCHANGER FOR TRACTION BATTERY WITH COMPRESSIBLE HEAT EXCHANGER CHANNELS**
WÄRMETAUSCHER FÜR TRAKTIONSBATTERIE MIT KOMPRIMIERBAREN WÄRMETAUSCHERKANÄLEN
ÉCHANGEUR DE CHALEUR POUR BATTERIE DE TRACTION AVEC CANAUX D'ÉCHANGEUR DE CHALEUR COMPRESSIBLES

(43) Date of publication of application: 18.12.2024
(73) Proprietor: Kautex Textron GmbH & Co. KG, 53229 Bonn (DE)
(72) Inventor: ZHONG, Will, Shanghai 200120 (CN)
(74) Representative: Richly & Ritschel Patentanwälte PartG mbB
(86) International application number: PCT/EP2022/053171
(87) International publication number: WO 2023/151790

(56) References cited:
- EP-A1- 2 388 851
- WO-A1-2018/150279
- DE-A1- 102013 200 774
- DE-A1- 102015 110 669
- DE-A1- 102015 201 294
- US-A1- 2012 261 107
- US-A1- 2013 071 707

## Description

The present invention refers to a heat exchanger, in particular for use in a traction battery of an electric vehicle, comprising at least one fluid distributor for connection to a heat transport fluid supply line of a heat exchange circuit,
at least one fluid collector for connection to a heat transport fluid return line of the heat exchange circuit, and multiple heat exchanger channels, which interconnect the at least one fluid distributor and the at least one fluid collector and which provide a passage way for a heat transport fluid from the at least one fluid distributor to the at least one fluid collector, wherein
the heat exchanger channels are provided with at least one common contact surface for contacting a heat exchange target, in particular battery cells of the traction battery.

The present invention also refers to a traction battery of an electric vehicle, comprising
a battery housing,
multiple battery cells arranged in the battery housing, and at least one heat exchanger as specified above, wherein
the multiple battery cells are in thermal contact with the heat exchanger channels of the at least one heat exchanger at the at least one common contact surface.

The present invention further refers to a method for manufacturing the above heat exchanger, comprising the steps of providing the at least one fluid distributor for connection to a heat transport fluid supply line of a heat exchange circuit, providing the at least one fluid collector for connection to a heat transport fluid return line of the heat exchange circuit, providing multiple heat exchanger channels, and
interconnecting the at least one fluid distributor and the at least one fluid collector with the multiple heat exchanger channels, thereby providing a passage way for the heat transport fluid from the at least one fluid distributor to the at least one fluid collector, wherein
providing the multiple heat exchanger channels comprises performing an extrusion step of a plastic base material for manufacturing the multiple heat exchanger channels.

A traction battery of an electrically driven vehicle typically comprises multiple individual battery cells, which are electrically connected in series and in parallel for operation with high voltages and currents. In operation, i.e. when providing energy to an electric driving circuit of the vehicle or when being charged, the battery cells generate heat, which can reduce efficiency of the battery cells and therefore of the traction battery. Additionally, excessive heat can harm the battery cells and worst case even result in the battery cells catching fire. It is therefore required to cool the individual battery cells in the traction battery to improve the electrical performance of the battery cells and to avoid damages to the battery cells, the traction battery and the electrically driven vehicle due to high temperatures. Furthermore, an internal resistance of the battery cells increases with a decreasing temperature resistance of the battery cells. Hence, the battery cells are most efficiently operated at a defined operating temperature, which is typically above ambient temperature, in particular during winter. Heating the battery cells can raise their temperature quickly to the operating temperature, in particular during start-up and/or when charging the battery cells. Therefore, the battery cells can be generally considered as heat exchange targets.

State of the Art in cooling/heating of such traction batteries are heat exchangers, which are made of metal and mounted in contact with the battery cells. The heat exchangers typically comprise a fluid distributor, which is connected in the electrically driven vehicle to a heat transport fluid supply line of a heat exchange circuit, and a fluid collector, which is connected in the electrically driven vehicle to a heat transport fluid return line of the heat exchange circuit. Multiple heat exchanger channels connect the fluid distributor and the fluid collector. A heat transport fluid circulates through the heat exchanger. In a cooling mode, heat is transferred from the battery cells via the heat exchanger channels to the heat transport fluid, which transports the heat away from the battery cells. The same applies vice-versa in heating mode when heating the battery cells.

Such a cooling/heating mechanism relies on an efficient heat transfer between the battery cells and the heat transport fluid, which requires a good thermal contact between the heat exchanger channels and the heat exchange target, e.g. the battery cells. Gaps between contact surfaces of the battery cells and the heat exchanger channels due to tolerances during manufacturing and assembly are to be avoided. A secondary aspect is fixing and/or supporting the battery cells to avoid a risk of mechanical damages of the battery cells or the entire traction battery during operation. To avoid mechanical damage of the battery cells, they are typically fixed within a housing of the traction battery.

This typically requires particular mounting structures, which in turn increase a risk of incorrectly mounting the battery cells and having gaps between the battery cells and the heat exchanger.

EP 2 388 851 A1 discloses a heat exchanger according to the preamble of claim 1 comprising at least one fluid distributor and at least one fluid collector connected by multiple heat exchanger channels forming passage ways for a heat transport fluid. The channels are arranged to provide a contact surface for thermal interaction with a heat exchange target, such as battery components. DE 10 2013 200774 A1 relates to a device for tempering a battery module, comprising a fluid filled structure arranged in thermal contact with battery cells. The device is elastically deformable and can adapt to the surface of the battery cells to improve thermal contact.

It is an object of the present invention to provide a heat exchanger, in particular for use in a traction battery of an electric vehicle, a traction battery of an electric vehicle comprising such a heat exchanger, and a method for manufacturing such a heat exchanger, which enable a good thermal contact between to a heat exchange target and provides support for the heat exchange target, in particular support for battery cells of a traction battery of an electrically driven vehicle.

This object is achieved by the heat exchanger of present claim 1.

Advantageous embodiments of the heat exchanger are given in dependent claims 2 to 14.

In particular, the object is achieved by a heat exchanger, in particular for use in a traction battery of an electric vehicle, comprising
at least one fluid distributor for connection to a heat transport fluid supply line of a heat exchange circuit,
at least one fluid collector for connection to a heat transport fluid return line of the heat exchange circuit, and multiple heat exchanger channels, which interconnect the at least one fluid distributor and the at least one fluid collector and which provide a passage way for a heat transport fluid from the at least one fluid distributor to the at least one fluid collector, wherein
the heat exchanger channels are provided with at least one common contact surface for contacting a heat exchange target, in particular battery cells of the traction battery.

The inventive heat exchanger is characterized in that
- the heat exchanger channels are compressible upon exertion of a force in a direction perpendicular to the contact surface from their normal shape to a compressed shape, and
- the heat exchanger is provided for being mounted with the heat exchanger channels compressed into their compressed shape. The heat exchanger channels comprise reinforcing elements to increase a stiffness of the heat exchanger channels against the compression from the normal shape to the compressed shape.

This object is further achieved by the traction battery of present claim 15.

In particular, the object is achieved by a traction battery of an electric vehicle, comprising
a battery housing,
multiple battery cells arranged in the battery housing, and at least one heat exchanger according to any of claims 1 to 14, wherein
the multiple battery cells are in thermal contact with the heat exchanger channels of the at least one heat exchanger at the at least one common contact surface.

The inventive traction battery is characterized in that the heat exchanger channels of the at least one heat exchanger are transferred from their normal shape into the compressed shape when mounted between the battery cells or between the battery cells and the battery housing.

This object is further achieved by the method of present claim 16.

Advantageous embodiments of the method are given in dependent claims 17 to 24.

In particular, the object is achieved by a method for manufacturing the heat exchanger of any of claims 1 to 14, comprising the steps of
providing the at least one fluid distributor for connection to a heat transport fluid supply line of a heat exchange circuit, providing the at least one fluid collector for connection to a heat transport fluid return line of the heat exchange circuit, providing multiple heat exchanger channels, and
interconnecting the at least one fluid distributor and the at least one fluid collector with the multiple heat exchanger channels, thereby providing a passage way for the heat transport fluid from the at least one fluid distributor to the at least one fluid collector, wherein
providing the multiple heat exchanger channels comprises performing an extrusion step of a plastic base material for manufacturing the multiple heat exchanger channels.

The basic idea of the present invention is to improve heat transfer between the battery cells and the heat transport fluid circulating through the heat exchanger by an improved mounting of the heat exchanger. The improvement is achieved by the elastic compression of the heat exchanger channels into the compressed shape when mounted. Hence, the heat exchanger channels generate a force against the force applied when mounting the heat exchanger, so that e.g. the battery cells are securely fixed in the traction battery. Furthermore, the elastic compression and the resulting force against the heat exchange target, e.g. the battery cells, eliminates gaps, which can occur due to geometry changes, manufacturing tolerances and flexibility of materials. When the heat exchanger channels have their normal shape, their extension is larger than a gap for receiving the heat exchanger, e.g. a gap between two heat exchange targets or between a heat exchange target and a housing, and the heat exchanger channels automatically adapt their shapes to the respective heat exchange target (s) and e.g. the housing. The compression of the heat exchanger channels refers to a free deformation when exerting a force. Hence, the heat exchanger channel has flexible walls, which enable the compression. The mounting of the heat exchanger with the heat exchanger channels in the compressed state immediately and permanently enables the fixation of the heat exchange target, e.g. the battery cells. Hence, it is not dependent e.g. on a pressure applied in the heat exchanger channels or other conditions. A further advantage exists compared to heat exchanger with rigid, stiff heat exchanger channels, which are sometimes used, and which require springs to push the heat exchanger channels against the heat exchange target. Such spring-based systems are not reliable.

A further advantage is realized when a pressurized heat transport fluid circulated through the heat exchanger. Hence, the pressure in the heat exchanger channels increases the strength and stiffness of the heat exchanger channels, so that the contact between the heat exchanger channels and the heat exchange target will be further improved and the heat exchange target, e.g. the battery cells, will be more reliably held and fixed.

Preferably, the heat exchanger is mounted to the battery housing in a fixed manner. Accordingly, the battery cells can be held e.g. between two heat exchangers or between a heat exchanger and an additional support, e.g. at the battery housing. Accordingly, instead of mounting the battery cells in the battery housing in a fixed manner, the battery cells can be mounted between the heat exchangers and/or between one heat exchanger and the additional support. Hence, misalignment of the battery cells relative to the heat exchanger(s) can be avoided.

The at least one fluid distributor comprises an inlet port for connection to the heat transport fluid supply line of the heat exchange circuit. The at least one fluid distributor distributes the heat transport fluid from the inlet port to the connected heat exchanger channels.

Similarly, the at least one fluid collector comprises an outlet port for connection to the heat transport fluid return line of the heat exchange circuit. The at least one fluid collector collects the heat transport fluid from the connected heat exchanger channels and provides it to the outlet port.

Typically, the heat exchanger comprises one fluid distributor and one fluid collector, and the heat exchanger channels extend in a common plane between the fluid distributor and the fluid collector. However, also more complex heat exchangers can be provided.

The fluid distributor and the fluid collector can be provided as different elements, so that the heat exchanger channels extend e.g. directly between the fluid distributor and the fluid collector. Alternatively, the fluid distributor(s) and fluid collector(s) can be provided integrally, i.e. as a single element, e.g. with the fluid distributor located besides or on top of the fluid collector. In this case, the heat exchanger channels can be provided e.g. with a U-form for interconnecting the inlet and the outlet. However, this requires differently shaped heat exchanger channels. Alternatively, the heat exchanger channels can be connected to an intermediate interconnecting element, which interconnects to heat exchanger channels connected to the fluid distributor and the heat exchanger channels connected to the fluid collector. Preferably, the interconnecting element has an internal U-form to guide incoming heat transport fluid into an opposite direction. Hence, simple, preferably straight heat exchanger channels can be used for connection. A similar arrangement of fluid distributor(s) and fluid collector(s) can be realized with the fluid distributor(s) and fluid collector(s) being individual components.

Providing the at least one fluid distributor and the at least one fluid collector for connection to a heat transport fluid return line of the heat exchange circuit can be a single step in case the fluid distributor(s) and the fluid collector(s) are provided as a single element.

The multiple heat exchanger channels are provided in a tube-like manner with an outer wall and a passageway for circulating the heat transport fluid. Different cross-sections can be applied to the heat exchanger channels. The multiple heat exchanger channels are typically provided with a similar or identical structure. Further preferred, the heat exchanger channels have a continuous cross-sectional shape throughout their entire length. The heat exchanger channels can have different configurations comprising a straight shape, a U-shape or an S-shape, just to name a few. The configuration can be chosen depending on a design of the traction battery and/or the arrangement of the battery cells in the battery housing.

The heat transport fluid circulates from the at least one fluid distributor through the heat exchanger channels to the at least one fluid collector. The heat transport fluid can be in a liquid or gaseous state when circulating through the heat exchanger and the further cooling circuit. The heat exchange circuit comprises a heat sink for removing heat from the heat transport fluid and or a heat source for heating the heat transport fluid, depending on an operational mode for heating or cooling the heat exchange target.

The heat exchanger channels contact the heat exchange target at their at least one common contact surface. The heat exchange target comprises in particular the battery cells of the traction battery. Each heat exchanger channel can be in contact with any suitable number of battery cells. Furthermore, each battery cell can be in contact with any suitable number of heat exchanger channels.

The heat exchange target can be only a heat source or only a heat sink. Furthermore, the heat exchange target can be switchable between heat source and heat sink, so that the heat exchange circuit can be switched between cooling and heating the heat exchange target.

The heat exchanger can be provided with any suitable shape, in particular a flat shape with a flat common contact surface. The battery cells can be arranged on top of, below, or next to the common contact surface. However, since the heat exchanger channels are flexible, there is no stiff form defined for the heat exchanger. For example, in the case of cylindric battery cells, the battery cells can be arranged in a honeycomb-shaped manner next to each other, and the heat exchanger channels of the heat exchanger can extend between the battery cells and adopt to the arrangement of the battery cells.

When the heat exchanger is mounted between two heat exchange targets, it is preferably provided with two common contact surfaces to contact both heat exchange targets.

The traction battery of the electric vehicle comprises multiple individual battery cells, which are electrically connected in series and in parallel for operation with high voltages and currents. The battery cells are arranged in the battery housing in any suitable form. The battery housing comprises through-holes for passing heat transport fluid tubes and/or electric cables. Alternatively, the battery housing can comprise ports for connection of heat transport fluid tubes and/or electric cables.

The multiple battery cells are preferably in direct thermal contact with the heat exchanger channels. However, in some cases, thermal contact and/or distribution elements can be provided between the at least one common contact surface of the heat exchanger and the battery cells.

The flexible tubes commonly constitute a heat transfer zone for conducting heat from the heat exchange target to the heat transport fluid circulating through the heat exchanger channels.

The heat exchanger channels are preferably made of an elastic, flexible plastic base material in the extrusion process. Different extrusion techniques can be applied including an injection molding process or a continuous extrusion process.

According to a preferred embodiment, the heat exchanger channels are provided with two common contact surfaces for contacting heat exchange targets, in particular battery cells of the traction battery, and the two common contact surfaces are provided at opposite sides of the heat exchanger. Hence, the heat exchanger channels can contact two heat exchange targets at the same time and enable heat exchange with both heat exchange targets at the same time. The heat exchanger with the heat exchanger channels can be mounted in between the heat exchange targets, e.g. between battery cells, which enables a high degree of freedom to design the traction battery. Since the heat exchanger is supported at the two contact surfaces, no further support is required. The heat exchanger(s) can be held by the battery cells, when the battery cells are mounted at the battery housing, or the heat exchanger(s) can be mounted at the battery housing, and the heat exchanger(s) hold the battery cells. Depending on the shape of the heat exchange target(s), the heat exchange targets can be two individual heat exchange targets or two regions of a single heat exchange target.

According to a preferred embodiment, the heat exchanger channels comprise a plastic base material, in particular a thermoplastic polymer material. Hence, the heat exchanger channels can be provided with several beneficial characteristics, in particular in respect to a design of traction batteries. For example, the plastic base material is typically not electrically conductive, which reduces a potential hazard due to the electricity of the traction battery. Furthermore, the plastic base material can be provided with a low weight, e.g. compared to heat exchanger channels made of metal. The plastic base material can be provided with integral flexibility for providing the compressible heat exchanger channels. Manufacturing of such heat exchanger channels can be easily performed. Different extrusion or molding techniques are known, which can be applied. The plastic base material can be a thermoplastic polymer material, typically referred to as TPE. In particular, a thermoplastic vulcanizate material (TPV) can be selected from the group of thermoplastic polymer materials. Thermoplastic vulcanizate materials (TPV) are part of the thermoplastic family of polymers. However, the thermoplastic vulcanizate materials have elastomeric properties similar to ethylene propylene diene monomer rubbers (EPDM rubber), which combines characteristics of vulcanized rubber with processing properties of thermoplastic materials. TPV is a dynamically vulcanized alloy consisting mostly of fully cured particles of EPDM rubber, which are encapsulated in a matrix of polypropylene (PP). One advantage of TPV is that it can be processed using conventional thermoplastic processes such as injection molding, blow molding and extrusion molding. It can also be welded with PP. The usage of the flexible heat exchanger channels comprising a plastic base material results in a weight reduction and process simplification by eliminating thermal interface materials used in state of the Art heat exchangers. Furthermore, a weight reduction can be achieved due to lower material density of the plastic base material compared to metal heat exchangers, in particular with heat exchanger channels made of metal.

According to a preferred embodiment, the heat exchanger channels comprise a thermally conductive filler material, preferably an electrically isolating filler material. The thermally conductive filler material facilitates heat transfer between the heat exchange target and the heat transport fluid inside the heat exchanger channels. The thermally conductive filler material is provided at least in a part of the heat exchanger channel, which corresponds to the at least one common contact surface. Hence, heat transfer from the heat exchange target at the respective contact surface can be improved. Other areas of the heat exchanger channels do not require an improved heat transfer and can be provided without the thermally conductive filler material. Different materials can be used as thermally conductive filler materials including by way of example metals, metallic oxides, metallic nitrides, graphite, or minerals. The filler materials can be provided with a fine granularity like a powder and added to the base material. The use of electrically isolating filler material is preferred in applications of traction batteries to reduce a potential hazard due to the electricity of the traction battery.

According to a preferred embodiment, the heat exchanger channels are provided with a two-layer structure with an inner layer having a plastic base material comprising an electrically conductive filler material, and an outer layer having a plastic base material comprising an electrically isolating filler material or no filler material. Electrically isolating filler materials with good thermal conductivity are typically more expensive than thermally conductive filler materials, which are also electrically conductive. Hence, the heat exchanger channels can be provided with an electrically not conductive outer surface, so that a potential hazard due to the electricity of the traction battery is reduced. At the same time, use of expensive filler materials, which are electrically isolating and have a good thermal conductivity, can be reduced or even avoided. In case the outer layer comprises the respective filler material, which is thermally conductive and electrically not conductive, heat transfer through the heat exchanger channels is further improved compared to the second layer having no thermally conductive filler material. However, since the second layer is only a part of the heat exchanger channel, the effect of a lack of thermally conductive filler material is only small. In each case, the thermally conductive filler material of the inner layer enables a good heat transfer through the heat exchanger channels. Preferably, the inner layer and the outer layer comprise the same or a similar plastic base material, which facilitates bonding of the inner layer and the outer layer to provide homogeneous heat exchanger channels. Preferably, the outer layer comprises a nitride filler material, and the inner layer comprises a graphite-based filler material. Other electrically conductive filler materials comprise by way of example metals or metallic oxides. When the two layers use the same plastic base material, they can easily be connected to integrally form the respective heat exchanger channel. Preferably, the heat exchanger channels are provided based on a continuous extrusion process, which provides a continuous heat exchanger channel, and cutting the continuous heat exchanger channel into individual heat exchanger channels.

According to a preferred embodiment, the inner layer and the outer layer comprise different plastic base materials and the heat exchanger channels comprise a bonding layer bonding the inner layer and the outer layer. The use of different plastic base materials enables the manufacturing of the first and second layer with different characteristics, in particular a different strength, stiffness or rigidity. It can also be beneficial in respect to cost optimization to use different base materials. However, since the inner layer and the outer layer comprise different plastic base materials, they typically do not integrally connect to each other. This disadvantage can be overcome by the bonding layer. The bonding layer is provided between the inner layer and the outer layer. The bonding layer can be a glue layer, an adhesion layer or any other suitable connection layer.

According to the invention as defined in claim 1 the heat exchanger channels comprise reinforcing elements to increase a stiffness of the heat exchanger channels against the compression from the normal shape to the compressed shape. With the reinforcing elements, the heat exchanger channels can be provided with a desired stiffness. The stiffness can be adjusted e.g. by a number, design, arrangement, or material of the reinforcing elements. The reinforcing elements increase a structural strength of the heat exchanger channels and assure a continuous passage of the heat transport fluid through the heat exchanger channels. The reinforcing elements are preferably provided along the entire length of the heat exchanger channels. For example, reinforcing elements can be provided locally throughout the entire heat exchanger channels. The reinforcing elements are arranged so that a passage of the heat transport fluid through the heat exchanger channels is not interrupted or essentially limited. Furthermore, in operation, also an internal pressure of the heat transport fluid can act against the compression of the heat exchanger channels.

According to a preferred embodiment, the reinforcing elements are provided as ribs extending in parallel to a flow direction of the heat transport fluid within the heat exchanger channels, wherein the ribs are arranged with an orientation essentially perpendicular to the contact surface extending towards an opposite site of the heat exchanger channels, and/or the ribs are arranged with an angled orientation extending from an area of the contact surface towards an opposite site of the heat exchanger channels, and/or the ribs are provided with an x-shape at an inner face of the heat exchanger channels in an area of the contact surface. The ribs have a longitudinal extension in the longitudinal direction of the respective heat exchanger channel. Hence, the ribs can separate an interior of the heat exchanger channels depending on their detailed design. Preferably, the ribs are provided as continuous walls. Accordingly, the overall heat exchanger channels can be provided with the same cross section over their entire length. A combination of different kinds of ribs can be provided in each heat exchanger channel.

Ribs, which are arranged with an orientation essentially perpendicular to the contact surface extending towards an opposite site of the heat exchanger channels, provide a very good stiffness of the heat exchanger channels, but reduce flexibility of the heat exchanger channels. Ribs, which are arranged with an angled orientation extending from an area of the contact surface towards an opposite site of the heat exchanger channels, provide a very good flexibility of the heat exchanger channels, but provide a reduced stiffness of the heat exchanger channels. Ribs, which are provided with an x-shape at an inner face of the heat exchanger channels in an area of the contact surface, provide a good stiffness of the heat exchanger channels and maintain a good flexibility of the heat exchanger channels. The ribs preferably extend from the area of the contact surface to the opposite site of the heat exchanger channels and are connected to the opposite site.

Apart from the orientation of the ribs, stiffness and flexibility of the heat exchanger channels can be adjusted by distances between ribs, a strength of the ribs, a number of ribs of the heat exchanger channel, a material of the ribs, or others.

According to a preferred embodiment, side walls of the heat exchanger channels, which extend from the respective contact surface(s), preferably in a perpendicular direction, comprise stiffening structures, wherein the side walls are provided integrally with the stiffening structures, and/or the stiffening structures are provided at the side walls at an inner face of the heat exchanger channels, and/or the stiffening structures are provided at the side walls at an outer face of the heat exchanger channels. Hence, the stiffening structures can be attached to or provided integrally with the side walls. The stiffening structures can be realized e.g. by providing the side walls with a higher stiffness compared to the side wall alone and/or compared to an area forming the contact surface. By way of example, the side walls can be provided with an increased wall thickness and/or with ribs at their outer and/or inners surfaces. Different kinds of stiffening structures can be provided at the side walls having different shapes, numbers and orientations.

According to a preferred embodiment, the reinforcing elements and/or the stiffening structures comprise a reinforcing material like PP or TPV, in particular without thermally conductive fillers, which has an increased stiffness compared to a base material of the heat exchanger channels. The reinforcing elements and/or the stiffening structures are typically not part of the contact surface, so that thermal conductivity is not an important feature. Usage of reinforcing materials like PP or TPV, which increase stiffness/strength at low costs, is preferred. Preferably, the side walls are made of a different base material compared to the contact surface. Preferably, the sidewalls are transparent for laser irradiation to enable laser welding, e.g**.** PP.

According to a preferred embodiment, the at least one fluid distributor and/or the at least one fluid collector are provided with connection ports for connection to the heat exchanger channels in a connection area, wherein the connection ports and the heat exchanger channels overlap in the connection area. The connection ports define apertures of the respective fluid distributor and/or fluid collector for connection to the heat exchanger channels. In the connection area, the connection ports and the heat exchanger channels overlap to enable a tight and reliable connection between the heat exchanger channels and the respective fluid distributor and/or fluid collector. Preferably, the connection ports comprise a protruding tube portion, and the respective heat exchanger channel is inserted into the protruding tube portion, i.e. the connection ports encompass the heat exchanger channels, or the heat exchanger channel encompasses the respective protruding tube portion from outside. Additionally, welding techniques can be used to provide a tight connection between the heat exchanger channels and the respective fluid distributor and/or fluid collector. Preferably, the heat exchanger channels are inserted into the protruding tube portion. This is in particular beneficial when the heat exchanger channels have a structure with internal reinforcing elements, which might otherwise interfere with the connection ports. Preferably, the connection ports are made of a material, which is transparent for laser irradiation to enable laser welding between the heat exchanger channels and the connection ports of the respective fluid distributor and/or fluid collector. Hence, when the protruding tube portion encompasses the heat exchanger channel, laser welding can be easily applied to connect the heat exchanger channels and the protruding tube portions. The laser irradiation passes the protruding tube portion and heats a connection area between the protruding tube portion and the respective heat exchanger channel.

According to a preferred embodiment, the at least one fluid distributor and/or the at least one fluid collector are compressible upon exertion of a force from their normal shape to a compressed shape, and the connection ports are encompassed by the heat exchanger channels in the connection area to overlap the connection area from outside. Hence, the connection ports comprise a protruding tube portion, which are encompassed by the heat exchanger channels in the connection area. When the connected heat exchanger channels are compressed, the compression of the heat exchanger channels results in a compression of the connection ports and thereby an at least partial compression of the at least one fluid distributor and/or the at least one fluid collector. Preferably, the connection ports extend into a region, where the heat exchanger channels are in contact with the heat exchange target, i.e. a region where the force is exerted on the heat exchanger channels to compress the heat exchanger channels. Hence, the force is automatically applied also to the connection ports, i.e. the protruding tube portions. Accordingly, the at least one fluid distributor and/or the at least one fluid collector are compressed together with the heat exchanger channels when mounting the heat exchanger, in particular in the traction battery.

According to a preferred embodiment, the at least one fluid distributor and/or the at least one fluid collector are essentially not compressible upon exertion of a force, and the connection ports are encompassed by the heat exchanger channels in the connection area to overlap the connection area from outside. Hence, the connection ports can comprise protruding tube portions, which are encompassed by the heat exchanger channels in the connection area. The connection ports, in particular the protruding tube portions, do not extend into a region, where the heat exchanger channels are in contact with the heat exchange target, so that the connection ports are not in risk of damage due to unwanted deformation. However, when the heat exchanger channels are compressed, they are only compressed outside the connection area, which enables a tight connection between the connection ports and the heat exchanger channels in the connection area.

According to a preferred embodiment, the normal shape of the heat exchanger channels is an essentially circular or elliptical shape and the compressed shape of the heat exchanger channels is a flattened shape with a flat contact surface and an essentially flat opposite surface and convex side walls extending therebetween, or the normal shape of the heat exchanger channels is a shape with a flat contact surface and an essentially flat opposite surface and convex side walls extending therebetween and the compressed shape of the heat exchanger channels is a further flattened shape with a reduced distance between the flat contact surface and the flat opposite surface compared to the normal shape. Each case is possible depending on design requirements. In particular, when the normal shape of the heat exchanger channels already is a shape with a flat contact surface, generally flat heat exchanger channels can be provided with a large flat contact surface for enabling contact with the heat exchange target, in particular with the battery cells.

According to a preferred embodiment, the step of performing an extrusion step of a plastic base material comprises performing an extrusion step of the base material containing a thermally conductive filler material, in particular with a composition comprising up to a 50% of the filler material, preferably with a composition comprising up to a 40% of the filler material, further preferred with a composition comprising more than a 20% of the filler material, still further preferred with a composition comprising more than a 30% of the filler material. The thermally conductive filler material improves the thermal conductivity of the overall heat exchanger channels, in particular in the area of the at least one common contact surface for contacting the heat exchange target. An increased amount of filler material improves thermal conductivity of the heat exchanger channels. However, an increased amount of filler material reduces the characteristics of the heat exchanger channel based on the plastic base material, e.g. flexibility and/or stiffness and/or rigidity of the heat exchanger channels, so that the specified ranges have proven most suitable for manufacturing the heat exchanger channels. The plastic base material can be a thermoplastic polymer material, typically referred to as TPE. In particular, a thermoplastic vulcanizate material (TPV) can be selected from the group of thermoplastic polymer materials. TPV is a dynamically vulcanized alloy consisting mostly of fully cured particles of EPDM rubber, which are encapsulated in a matrix of polypropylene (PP). One advantage of TPV is that it can be processed using conventional thermoplastic processes such as injection molding, blow molding and extrusion molding. It can also be connected to PP by welding.

According to a preferred embodiment, the step of performing an extrusion step of the base material containing a thermally conductive filler material comprises performing a co-extrusion step of the heat exchanger channels with an inner layer and an outer layer, wherein the inner layer comprises a plastic base material and a thermally conductive filler material, which is thermally and electrically conductive, and the outer layer comprises a plastic base material and a thermally conductive filler material, which is thermally conductive but not electrically conductive, or only a plastic base material without a filler material. Hence, a multilayer coextrusion is performed for providing the two layers of the heat exchanger channels. Based on the two layers, the heat exchanger channels can be provided with an electrically not conductive outer surface, so that a potential hazard due to the electricity of the traction battery is reduced. At the same time, use of expensive filler materials, which are electrically isolating and have a good thermal conductivity, can be reduced or even avoided. The co-extrusion step enables an efficient manufacturing of the respective heat exchanger channels. In case the outer layer comprises the respective filler material, which is thermally conductive and electrically not conductive, heat transfer through the heat exchanger channels is further improved compared to the second layer having no thermally conductive filler material. In each case, the thermally conductive filler material of the inner layer enables a good heat transfer through the heat exchanger channels. Preferably, the inner layer and the outer layer comprise the same or a similar plastic base material, which facilitates bonding of the inner layer and the outer layer to provide homogeneous heat exchanger channels. Preferably, the outer layer comprises a nitride filler material, and the inner layer comprises a graphite-based filler material. Other electrically conductive filler materials comprise by way of example metals or metallic oxides. Preferably, the co-extrusion step is performed as a continuous extrusion process, which provides a continuous heat exchanger channel. The individual heat exchanger channels are provided by cutting the continuous heat exchanger channel into individual heat exchanger channels with a desired length.

According to a preferred embodiment, the step of performing a co-extrusion step of the heat exchanger channel with an inner layer and an outer layer comprises providing a bonding layer between the inner layer and the outer layer. The bonding layer bonds the inner layer and the outer layer together. The bonding layer enables a connection of the inner layer and the outer layer also in case the layers comprise different plastic base materials, which do not bond directly with each other. Preferably, the bonding layer is also co-extruded with the inner layer and the outer layer of the heat exchanger channels.

According to a preferred embodiment, the step of performing an extrusion step of a plastic base material for manufacturing the multiple heat exchanger channels comprises a continuous extrusion step for providing a continuous heat exchanger channel and cutting the individual heat exchanger channels from the continuous heat exchanger channel. Hence, the heat exchanger channels can be easily provided with the same cross-sectional shape, which facilitates the manufacturing of the heat exchanger channels. Different plastic base materials can be used in the continuous extrusion steps, e.g. thermoplastic polymer materials (TPE), in particular a thermoplastic vulcanizate material (TPV), polypropylene (PP), or others. Co-extrusion and other techniques can be applied.

According to a preferred embodiment, the step of providing the multiple heat exchanger channels comprises performing a co-extrusion step of the heat exchanger channels with reinforcing elements and/or stiffening structures. The co-extrusion of the heat exchanger channels including the reinforcing elements and/or the stiffening structures enables production of heat exchanger channels with a high degree of freedom for different characteristics. In particular, the reinforcing elements and/or stiffening structures can be extruded using different materials compared to the heat exchanger channel itself. The heat exchanger channel itself can be provided with good characteristics in respect to heat transfer, and the reinforcing elements and/or the stiffening structures can be provided to define a stiffness or rigidity, of the heat exchanger channel without a need of using expensive materials used for the heat exchanger channel, e.g. expensive fillers. When the same or a similar plastic base material of the heat exchanger channels is used for the reinforcing elements and/or the stiffening structures, the reinforcing elements and/or the stiffening structures can be easily bonded to the heat exchanger channel during the co-extrusion step.

The co-extrusion step of the heat exchanger channels with the reinforcing elements and/or the stiffening structures can be performed together with the co-extrusion step of the heat exchanger channels with an inner layer and an outer layer. Hence, a further degree of freedom can be added to the manufacturing step of manufacturing the heat exchanger channels with the reinforcing elements and/or the stiffening structures. In particular, when the outer and inner layer comprise different base materials, the base material for the reinforcing elements and/or the stiffening structures can be chosen in accordance with the base material of the outer and inner layer. Hence, reinforcing elements and/or stiffening structures provided inside the heat exchanger channel are preferably provided with the same base material as the inner layer, whereas stiffening structures provided at an outer side of the heat exchanger channel are preferably provided with the same base material as the outer layer.

According to a preferred embodiment, the step of providing the at least one fluid distributor comprises molding, in particular injection molding, the at least one fluid distributor, and/or the step of providing the at least one fluid collector comprises molding, in particular injection molding, the at least one fluid collector. The fluid distributor and/or fluid collector can comprise a PP material or a TPE material, in particular a TPV material. In particular when the at least one fluid distributor and/or the at least one fluid collector are manufactured without fillers, they can be made transparent for laser irradiation, which can be beneficial in case of laser welding. Each of the at least one fluid distributor and/or the at least one fluid collector can be manufactured with a base body and a cover, which can be connected to the base body to close the respective fluid distributor or fluid collector. Hence, laser welding of the heat exchanger channels to connection ports of the respective fluid distributor or fluid collector can be performed from an inner side of the respective fluid distributor or fluid collector, i.e. from an inner side of the connection ports. Afterwards, the base body can be closed with its cover. Laser welding from an inner side of the fluid distributor or fluid collector is beneficial e.g**.** when connecting ports are made of materials transparent for laser irradiation. However, providing the cooling tubes with materials transparent for laser irradiation is typically not possible, in particular when thermally conductive filler materials are added.

According to a preferred embodiment, the step of interconnecting the at least one fluid distributor and/or the at least one fluid collector with the multiple heat exchanger channels comprises laser welding of the heat exchanger channels to the at least one fluid distributor and/or the at least one fluid collector. Laser welding is a reliable technique for connecting the heat exchanger channels to the at least one fluid distributor and/or the at least one fluid collector. In particular, the at least one fluid distributor and/or the at least one fluid collector can be provided with connection ports, in particular comprising protruding tube portions. The connection ports define apertures of the respective fluid distributor and/or fluid collector for connection to the heat exchanger channels. The connection ports and the heat exchanger channels preferably overlap in a connection area, which facilitates to manufacture a tight and reliable connection between the heat exchanger channels and the respective fluid distributor and/or fluid collector. The respective heat exchanger channels can be inserted into the protruding tube portions, i.e. the connection ports encompass the heat exchanger channels, or the heat exchanger channels encompass the protruding tube portions from outside. Preferably, one of the heat exchanger channels and the respective fluid distributor and/or fluid collector is transparent for laser irradiation, while the other is not transparent for laser irradiation, so that the laser irradiation can reach a contact surface between the heat exchanger channel and the connection port for welding. Further preferred, the heat exchanger channels are not transparent for laser irradiation, so that thermally conductive filler materials can be added to the heat exchanger channels. Preferably, the heat exchanger channels are inserted into the connection ports so that the connection ports encompass the heat exchanger channels. This is in particular beneficial when the heat exchanger channels have a structure with internal reinforcing elements. Otherwise, the connection ports have to be provided with a particular shape in accordance with the shape of the heat exchanger channels having the reinforcing elements.

According to a preferred embodiment, the steps of molding, in particular injection molding, the at least one fluid distributor and/or molding, in particular injection molding, the at least one fluid collector comprise molding, in particular injection molding, the at least one fluid distributor and/or the at least one fluid collector from plastic material, which is transparent for laser irradiation used for laser welding, and the step of laser welding of the heat exchanger channels to the at least one fluid distributor and/or the at least one fluid collector comprises laser welding the heat exchanger channels to the at least one fluid distributor and/or the at least one fluid collector through the at least one fluid distributor and/or the at least one fluid collector. Hence, when the heat exchanger channels cannot be made transparent for laser irradiation and it is desired to have the heat exchanger channels encompassing the connection ports, in particular protruding tube portions, laser welding can be reliably performed, when the connection ports of the at least one fluid distributor and/or the at least one fluid collector are transparent for laser irradiation, which is typically the case as long as no fillers are added. Hence, the laser welding step can be performed from an inner side of the fluid distributor or fluid collector. In order to enable laser welding, the at least one fluid distributor and/or the at least one fluid collector are for example provided with a welding opening to facilitate access to the internal side, and which can be closed. Preferably, each of the at least one fluid distributor and/or the at least one fluid collector can be manufactured with a base body and a cover, which can be connected to the base body to close the respective fluid distributor or fluid collector. Hence, after laser welding, the base body can be closed with its cover.

Feature and advantages described above with reference to the inventive method apply equally to the inventive heat exchanger or traction battery and vice versa. Furthermore, the individual method steps described above can be performed in different sequences compared to the above description. The above description of the method is given by way of example without excluding other sequences of the described method steps.

These and other aspects of the invention will be apparent from and elucidated with reference to the embodiments described hereinafter. Individual features disclosed in the embodiments can constitute alone or in combination an aspect of the present invention. Features of the different embodiments can be carried over from one embodiment to another embodiment.

In the drawings:
- Fig. 1:: shows a schematic, partial view of a traction battery of an electric vehicle comprising a battery housing, multiple battery cells arranged in the battery housing, and a heat exchanger according to a first, preferred embodiment;
- Fig. 2:: shows a schematic view of the heat exchanger of Fig. 1 with a fluid distributor, a fluid collector and multiple heat exchanger channels, which interconnect the fluid distributor and the fluid collector;
- Fig. 3:: shows a schematic, cross-sectional view of a heat exchanger channel of the heat exchanger of Fig. 2 in a normal shape and in a compressed shape;
- Fig. 4:: shows a partial, schematic view of the heat exchanger channel of Fig. 3 with a single-layer structure in accordance with the first embodiment;
- Fig. 5:: shows a partial, schematic view of the heat exchanger channel of Fig. 3 with a two-layer structure comprising an inner layer and an outer layer according to a second embodiment;
- Fig. 6:: shows a partial, schematic view of the heat exchanger channel of Fig. 3 with a two-layer structure comprising an inner layer and an outer layer and an additional bonding layer bonding the inner layer and the outer layer according to a third embodiment;
- Fig. 7:: shows a detailed, schematic view of the fluid distributor or the fluid collector of Fig. 2 with a base body having multiple connection ports and a cover in accordance with the first embodiment, wherein the fluid distributor or the fluid collector is not compressible;
- Fig. 8:: shows a detailed, schematic view of one of the heat exchanger channels of Fig. 2 connected to a connection port of the fluid distributor or the fluid collector of Fig. 7 in accordance with the first embodiment;
- Fig. 9:: shows a schematic view of a laser welding step performed to weld connection ports of the base body of the fluid distributor or the fluid collector according to Fig. 8 with heat exchanger channels, whereby the heat exchanger channels overlap protruding tube portions of the connection ports in a connection area, in accordance with the first embodiment;
- Fig. 10:: shows a schematic view of the laser welding step of Fig. 9 as performed from an inner side of the fluid distributor or the fluid collector according to Fig. 8 in accordance with the first embodiment;
- Fig. 11:: shows a detailed, schematic view of one of the heat exchanger channels of Fig. 2 connected to a connection port of the fluid distributor or the fluid collector, which is compressible, according to a fourth embodiment;
- Fig. 12:: shows a schematic view of a heat exchanger according to a fifth embodiment with an integrally provided fluid distributor and fluid collector, flat heat exchanger channels and an interconnecting element;
- Fig. 13:: shows a schematic, cross-sectional view of the flat heat exchanger channel of the heat exchanger of Fig. 12 in a normal shape and in a compressed shape with reinforcing elements as ribs with an angled orientation extending from an area of the contact surface towards an opposite site of the heat exchanger channels in accordance with the fifth embodiment;
- Fig. 14:: shows a schematic, cross-sectional view of flat heat exchanger channels for use in the heat exchanger of Fig. 12 with different arrangements of reinforcing elements as ribs according to a sixth, seventh and eighth embodiment;
- Fig. 15:: shows a schematic, cross-sectional view of a flat heat exchanger channel for use in the heat exchanger of Fig. 12 with reinforcing elements as ribs with an angled orientation extending from an area of the contact surface towards an opposite site of the heat exchanger channels according to a ninth embodiment;
- Fig. 16:: shows a schematic, cross-sectional view of a flat heat exchanger channel for use in the heat exchanger of Fig. 12 with reinforcing elements as ribs with an orientation essentially perpendicular to a contact surface and extending towards an opposite site of the heat exchanger channels according to a tenth embodiment;
- Fig. 17:: shows a detailed, schematic view of a connection port with a protruding tube portion of the fluid distributor or the fluid collector of the heat exchanger of Fig. 12 in accordance with the tenth embodiment;
- Fig. 18:: shows a schematic view of a laser welding step as performed from an outer side of the fluid distributor or the fluid collector according to Fig. 12 in accordance with the tenth embodiment;
- Fig. 19:: shows a schematic view of the laser welding step of Fig. 18 as performed for laser welding multiple heat exchanger channels in accordance with the fifth embodiment;
- Fig. 20:: shows a schematic view of a traction battery of an electric vehicle comprising a battery housing, multiple battery cells arranged in the battery housing, and a heat exchanger according to an eleventh embodiment;
- Fig. 21:: shows a schematic view of a traction battery of an electric vehicle comprising a battery housing, multiple battery cells arranged in the battery housing, and a heat exchanger according to a twelfth embodiment;
- Fig. 22:: shows a schematic view of battery cells of a traction battery of an electric a heat exchanger according to a thirteenth embodiment, wherein the battery cells are cylindric cells arranged in a honeycomb-shaped manner next to each other and the heat exchanger channels extending between the battery cells; and
- Fig. 23:: shows a flow chart of a method for manufacturing the heat exchanger of the first embodiment.

In the following description of embodiments, like features or components are referred to by the same reference numerals. A description of a component made in respect to one of the figures also applies to other figures in order to avoid a repeated description thereof. Furthermore, individual features described in respect to one embodiment can be embodied separately in other embodiments. Similarly, features described with respect to a method can be applied to a respective apparatus and vice versa.

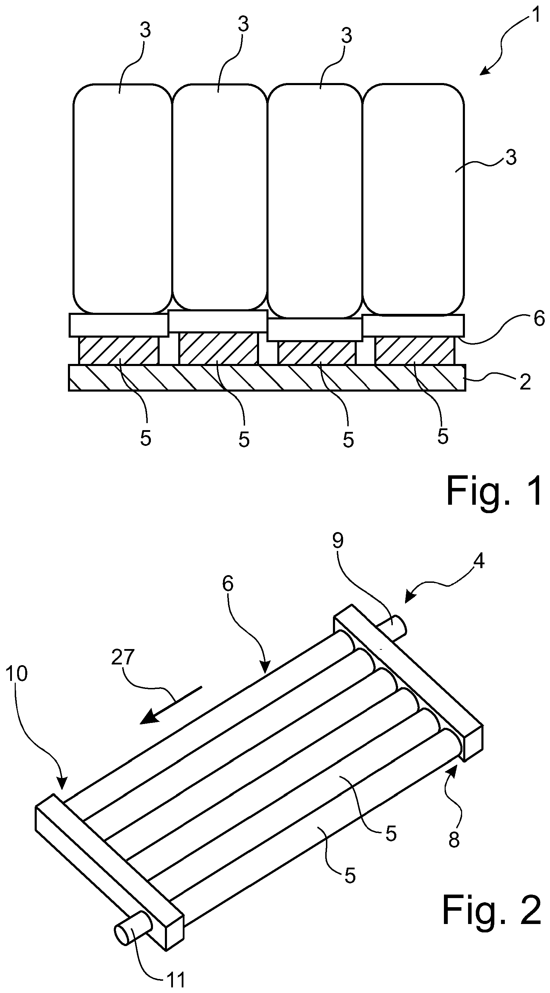

Figure 1 shows a traction battery 1 of an electric vehicle. The traction battery 1 comprises a battery housing 2, which is only partially depicted in figure 1.

The traction battery 1 further comprises multiple battery cells 3 arranged in the battery housing 2. The battery cells 3 are electrically connected in series and in parallel for operation with high voltages and currents.

Furthermore, a heat exchanger 4 is provided in the battery housing 2.

The battery cells 3 are in thermal contact with heat exchanger channels 5 of the heat exchanger 4 at a common contact surface 6 via thermal contact elements 7 provided between the battery cells 3 and the heat exchanger channels 5. The heat exchanger channels 5 are provided with an identical structure, which is discussed below in more detail.

In an alternative embodiment, the battery cells 3 are in direct thermal contact with the heat exchanger channels 5.

The heat exchanger 4 is shown in detail in figure 2. The heat exchanger 4 comprises a fluid distributor 8 for connection to a heat transport fluid supply line of a heat exchange circuit. Accordingly, the fluid distributor 8 comprises a respective inlet port 9 for connection to the heat transport fluid supply line. The heat exchanger 4 further comprises a corresponding fluid collector 10 for connection to a heat transport fluid return line of the heat exchange circuit. Accordingly, the fluid collector 10 comprises a corresponding outlet port 11 for connection to the heat transport fluid return line.

The heat exchanger 4 further comprises multiple of the already mentioned heat exchanger channels 5, which interconnect the fluid distributor 8 and the fluid collector 10 and which provide a passage way for a heat transport fluid from the fluid distributor 8 to the fluid collector 10. The fluid distributor 8 distributes the heat transport fluid from the inlet port 9 to the connected heat exchanger channels 5. The fluid collector 10 collects the heat transport fluid from the connected heat exchanger channels 5 and provides it to the outlet port 11. The heat transport fluid can be in a liquid or gaseous state when circulating through the heat exchanger 4 and the further heat exchange circuit. The heat exchange circuit comprises a heat sink for removing heat from the heat transport fluid and or a heat source for heating the heat transport fluid, depending on an operational mode for heating or cooling the battery cells 3 as heat exchange target.

As can be seen in figure 2, the heat exchanger channels 5 are arranged in a plane with the common contact surface 6 contacting the battery cells 3. Hence, the common contact surface 6 is a plane area.

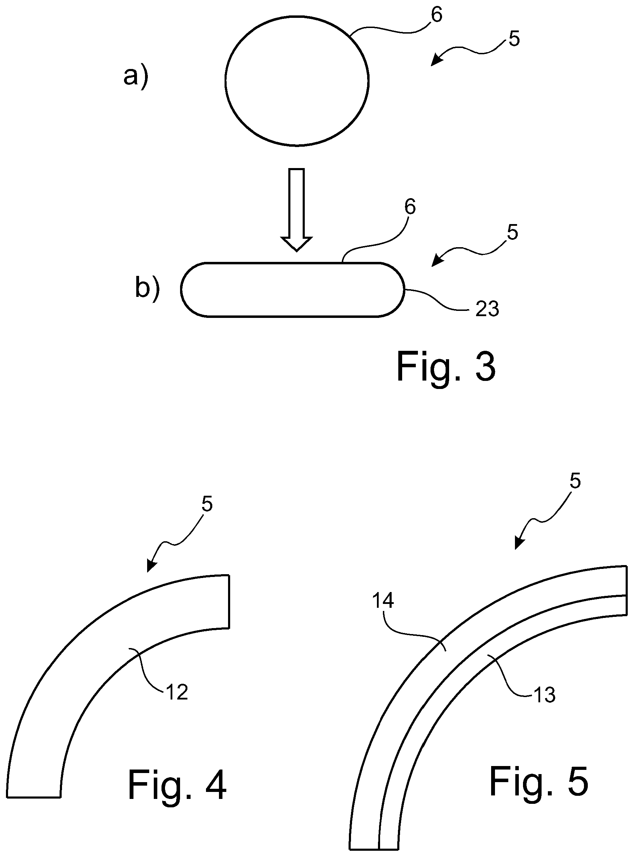

Figure 3 shows one of the heat exchanger channels 5 of the heat exchanger 4 shown in figure 2. The heat exchanger channels 5 normally have a normal shape shown in figure 3 a). The normal shape of the heat exchanger channel 5 is an essentially circular shape. The heat exchanger channel 5 is transferred from its normal shape into a compressed shape, which can be seen in figure 3 b), when mounted in the traction battery 1 between the battery cells 3 and the battery housing 2. The compressed shape of the heat exchanger channel 5 is a flattened shape with a flat contact surface 6 and an essentially flat opposite surface 25 and convex side walls 23 extending therebetween.

Hence, the heat exchanger channel 5 is compressible upon exertion of a force in a direction perpendicular to the contact surface 6 from the normal shape to the compressed shape, whereby the heat exchanger channel 5 is compressed into its compressed shape when the heat exchanger 4 is mounted in the traction battery 1.

As indicated in figure 4, the heat exchanger channels 5 of the first embodiment are provided with a mono-layer 12, i.e. with a single-layer structure, comprising a thermoplastic polymer material as plastic base material. The plastic base material of the first embodiment is a thermoplastic vulcanizate material (TPV) . The heat exchanger channels 5 further comprise a thermally conductive filler material chosen out of a group comprising metals, metallic oxides, metallic nitrides, graphite, or minerals. In this embodiment, nitride powder is chosen as thermally conductive filler material, which is electrically isolating in the plastic base material.

According to a second embodiment, as indicated in figure 5, the heat exchanger channels 5 are provided with a two-layer structure with an inner layer 13 having a plastic base material and comprising an electrically conductive filler material, and an outer layer 14 having the same plastic base material and comprising an electrically isolating filler material. In particular, the inner layer 13 is provided with a graphite filler material and the outer layer 14 is provided with nitride powder as filler material according to the second embodiment. The inner layer 13 and the outer layer 14 comprise TPV as plastic base material and are directly bonded to each other.

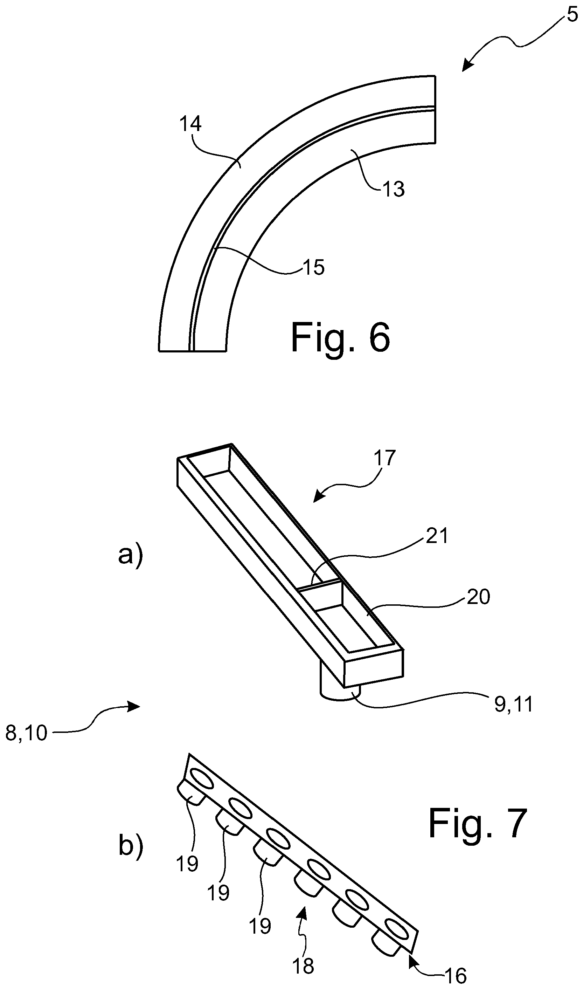

According to a third embodiment, as indicated in figure 6, the heat exchanger channels 5 are provided with a two-layer structure with an inner layer 13 having a plastic base material and comprising an electrically conductive filler material, and an outer layer 14 having a different plastic base material and no filler material. In particular, the inner layer 13 is provided with TPV as plastic base material and a graphite filler material, and the outer layer 14 is provided with polyethylene terephthalate (PET) as plastic base material. Furthermore, a bonding layer 15 is provided between the inner layer 13 and the outer layer 14. The bonding layer 15 can be a glue layer, an adhesion layer or any other suitable connection layer.

Figure 7 shows the fluid distributor 8 and the fluid collector 10 of figure 2, which have the same structure. The fluid distributor 8 and the fluid collector 10 each have a base body 16 and a cover 17 in accordance with the first embodiment. The base body 16 comprises connection ports 18, each of which provided with a protruding tube portion 19, as can be seen in figure 7 b). The cover 17 is shown in figure 7 a) and comprises an outer wall 20 as well as an internal wall 21, which is provided to improve a flow of the heat transport fluid.

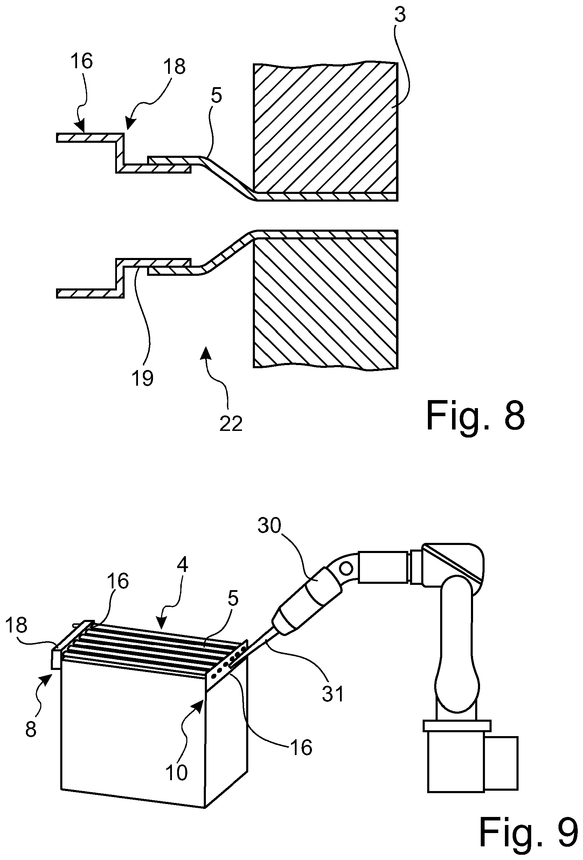

As can be seen in figure 8, the connection port 18 is encompassed by the heat exchanger channel 5 in a connection area 22. The fluid distributor 8 and the fluid collector 10 of the first embodiment are not compressible. Hence, as can be seen in figure 8, when the heat exchanger channel 5 is connected to the connection port 18 and the heat exchanger channel 5 is compressed into its compressed shape when mounted. However, the fluid distributor 8 and the fluid collector 10 with the connection port 18 are not compressed.

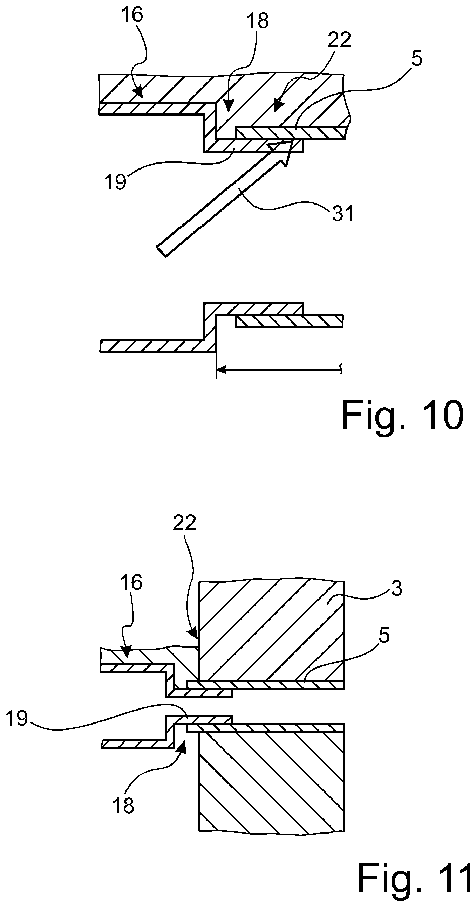

Figure 11 shows a detailed connection of the heat exchanger channels 5 of the heat exchanger 4 of Fig. 2 connected to a connection port 18 of the fluid distributor 8 or the fluid collector 10 according to a fourth embodiment. According to the fourth embodiment, the fluid distributor 8 or the fluid collector 10 is compressible from its normal shape to a compressed shape upon exertion of a force. Also in the fourth embodiment, as already shown in figure 8, the connection port 18 is encompassed by the heat exchanger channel 5 in the connection area 22. Hence, the heat exchanger channel 5 overlaps the protruding tube portion 19 from outside. When the connected heat exchanger channel 5 is compressed, the compression of the heat exchanger channel 5 results in a compression of the connection port 18 and thereby an at least partial compression of the fluid distributor 8 and the fluid collector 10, as can be seen in figure 11. As can be seen in detail in figure 11, the connection port 18 with the protruding tube portion 19 extends into a region, where the heat exchanger channel 5 is in contact with the battery cell 3, i.e. a region where the force is exerted on the heat exchanger channel 5 to compress the heat exchanger channel 5. Hence, the force is automatically applied also to the connection port 18, i.e. to the protruding tube portion 19, resulting in a compression of the fluid distributor 8 and the fluid collector 10.

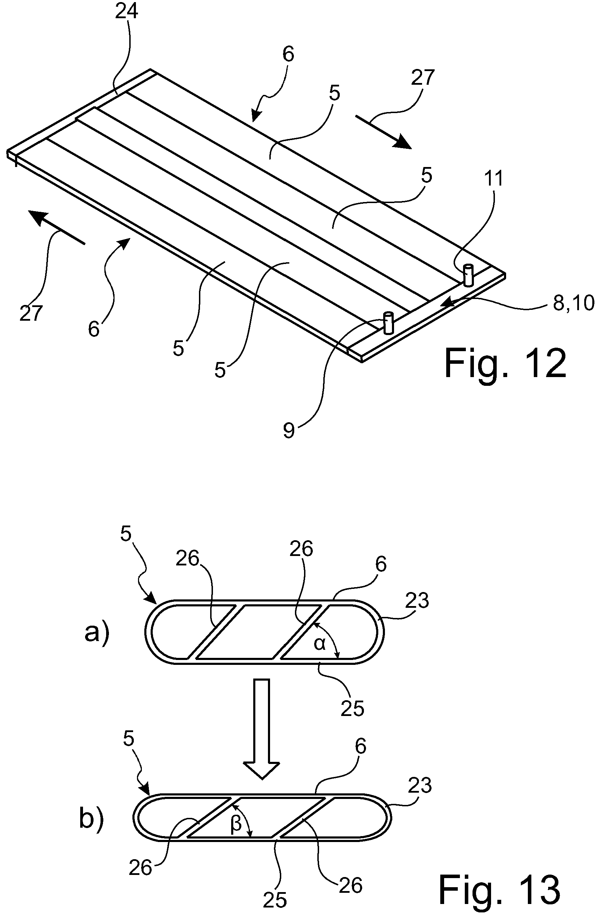

Figure 12 shows a heat exchanger 4 according to a fifth embodiment. As can be seen in figure 12, the fluid distributor 8 and the fluid collector 10 are provided integrally, i.e. as a single element, e.g. with the fluid distributor 8 located besides the fluid collector 10. The heat exchanger channels 5 are connected at one end to the fluid distributor 8 and the fluid collector 10, respectively, and on the other end to an intermediate interconnecting element 24, which interconnects to heat exchanger channels 5 connected to the fluid distributor 8 with the heat exchanger channels 5 connected to the fluid collector 10. The interconnecting element 24 has an internal U-form to guide incoming heat transport fluid from the fluid distributor 8 into an opposite direction back to the fluid collector 10.

As can be seen in figure 13 in detail, the heat exchanger channels 5 of the heat exchanger 4 of the fifth embodiment are provided with a normal shape, which is a shape with a flat contact surface 6, an essentially flat opposite surface 25 and convex side walls 23 extending therebetween. In the compressed shape, when the force is exerted on the heat exchanger channels 5, the heat exchanger channels 5 have a further flattened shape with a reduced distance between the flat contact surface 6 and the flat opposite surface 25 compared to the normal shape.

Hence, the heat exchanger channels 5 are provided with two common contact surfaces 6 for contacting the battery cells 3 of the traction battery 1, wherein the two common contact surfaces 6 are provided at opposite sides of the heat exchanger 4. Hence, the heat exchanger 4 of the fifth embodiment can be mounted in between battery cells 3 of the traction battery 1, or battery cells can be supported at both sides of the heat exchanger 4 of the fifth embodiment.

As can be further seen in figure 13, the heat exchanger channels 5 comprise reinforcing elements 26 to increase a stiffness of the heat exchanger channels 5 against the compression from the normal shape to the compressed shape. According to the fifth embodiment, two reinforcing elements 26 are provided as ribs extending in parallel to a flow direction 27 of the heat transport fluid within the heat exchanger channels 5. As can be seen in figure 13, the reinforcing elements 26 are arranged with an angled orientation with an angle α in the normal shape, and with an angle β in the compressed shape. The reinforcing elements 26 extend from an area of the contact surface 6 towards the opposite surface 25 of the heat exchanger channels 5.

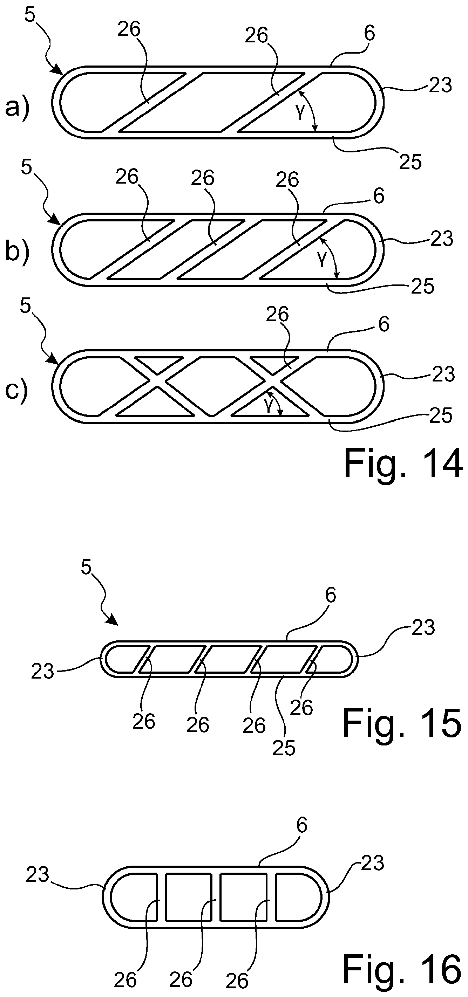

According to a sixth embodiment, which can be seen in figure 14 a), the heat exchanger channels 5 also comprise two reinforcing elements 26, which are provided as ribs extending in parallel to the flow direction 27 of the heat transport fluid within the heat exchanger channels 5. The reinforcing elements 26 are arranged with an angled orientation with an angle γ in the normal shape.

According to a seventh embodiment, which can be seen in figure 14 b), the heat exchanger channels 5 comprise three reinforcing elements 26, which are provided as ribs extending in parallel to the flow direction 27 of the heat transport fluid within the heat exchanger channels 5. Also the reinforcing elements 26 of the sixth embodiment are arranged with an angled orientation with an angle γ in the normal shape.

An eighth embodiment can be seen in figure 14 c). The heat exchanger channels 5 of the eighth embodiment comprise two reinforcing elements 26, which are provided as ribs extending in parallel to the flow direction 27 of the heat transport fluid within the heat exchanger channels 5. The reinforcing elements 26 of the eighth embodiment are provided with an x-shape, which is formed by two individual, crossed ribs at an inner face of the heat exchanger channels 5 in an area of the contact surface 6. The reinforcing elements 26 of the eighth embodiment are arranged with an angled orientation of their individual, crossing ribs with an angle γ in the normal shape.

A heat exchanger channel 5 of a ninth embodiment can be seen in figure 15. The heat exchanger channel 5 of the ninth embodiment is a flat heat exchanger channel 5 for use in the heat exchanger 4 of Fig. 12. The heat exchanger channels 5 of the ninth embodiment comprise four reinforcing elements 26, which are provided as ribs extending in parallel to the flow direction 27 of the heat transport fluid within the heat exchanger channels 5. The reinforcing elements 26 are arranged with an angled orientation, as can be seen in figure 15.

Figure 16 shows a heat exchanger channel 5 of a tenth embodiment. Also the heat exchanger channel 5 of the tenth embodiment is a flat heat exchanger channel 5 for use in the heat exchanger 4 of Fig. 12. The heat exchanger channels 5 of the tenth embodiment comprise three reinforcing elements 26, which are provided as ribs extending in parallel to the flow direction 27 of the heat transport fluid within the heat exchanger channels 5. The reinforcing elements 26 are arranged with an orientation essentially perpendicular to the contact surface 6 extending towards an opposite site of the heat exchanger channels 5.

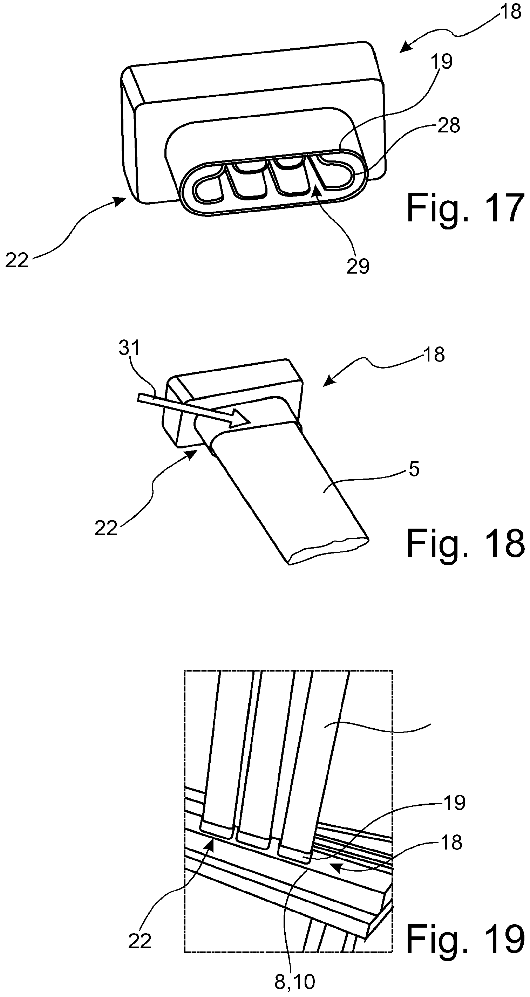

Figure 17 shows a detailed view of a connection port 18 corresponding to the heat exchanger channels 5 of the tenth embodiment. The connection port 18 is provided at a respective fluid distributor 8 and/or fluid collector 10, as discussed above in detail. As can be seen in figure 17, the connection port 18 is provided with a protruding tube portion 19 for receiving a heat exchanger channel 5, as shown in figure 18, wherein the protruding tube portion 19 encompasses the heat exchanger channel 5 in the connection area 22. The connection port 18 is further provided with inner guide elements 28, which are encompassed by the heat exchanger channel 5. Hence, the heat exchanger channel 5 is held between the protruding tube portion 19 and the inner guide elements 28. The inner guide elements 28 are separated by gaps 29, which are provided in accordance with positions of the reinforcing elements 26 of the heat exchanger channel 5 of figure 16, so that the reinforcing elements 26 can be received in the gaps 29 when the heat exchanger channel 5 is connected.

Each of the heat exchanger channels 5 of the previously discussed embodiments 1 to 10 is provided with the same cross section over its entire length in the flow direction 27.

The reinforcing elements 26 comprise a reinforcing material like PP or TPV, which has an increased stiffness compared to a base material of the heat exchanger channels 5. Reinforcing elements 26 are provided without thermally conductive fillers.

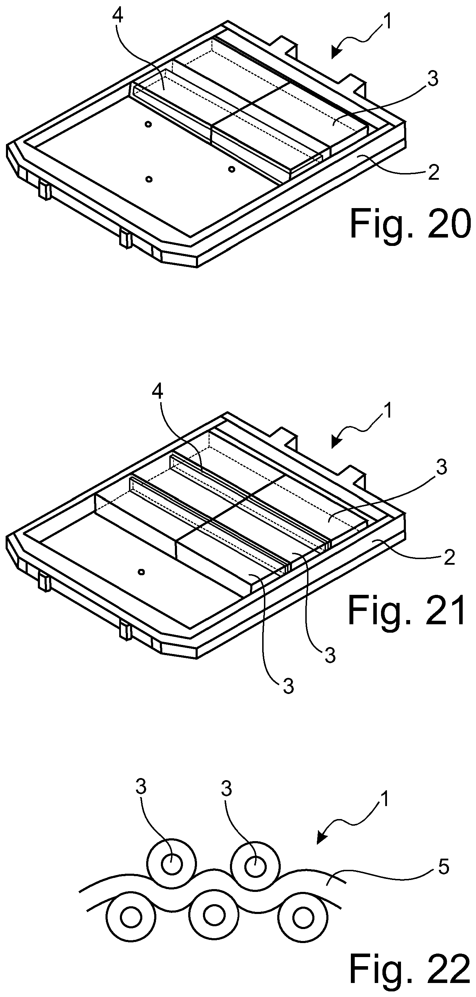

Figure 20 shows a traction battery 1 according to an eleventh embodiment, which has in general already been discussed above. Accordingly, also the traction battery 1 of the eleventh embodiment comprises a battery housing 2, multiple battery cells 3 arranged in the battery housing 2, and multiple heat exchangers 4, one of which is shown in figure 20. The shown heat exchanger 4 has a flat contact surface 6, an essentially flat opposite surface 25 and convex side walls 23 extending therebetween. The heat exchangers 4 are provided at a bottom of the battery housing 2 in a horizontal orientation in figure 20, and the battery cells 3 are located on top of the contact surfaces 6 of the respective heat exchangers 4.

Figure 21 shows a traction battery 1 according to a twelfth embodiment. Also the traction battery 1 of the twelfth embodiment comprises a battery housing 2 and multiple battery cells 3 arranged in the battery housing 2. The traction battery 1 of the twelfth embodiment comprises multiple heat exchangers 4, which have a flat contact surface 6, an essentially flat opposite surface 25 and convex side walls 23 extending therebetween. The heat exchangers 4 are arranged vertically in figure 21 and located between battery cells 3.

Figure 22 shows an arrangement of multiple battery cells 3 and a heat exchanger channel 5 of a heat exchanger according to a thirteenth embodiment. The battery cells 3 are cylindrical cells and the heat exchanger channel 5 extends through spaces between the battery cells 3, wherein the heat exchanger channel 5 is in thermal contact with the battery cells 3.

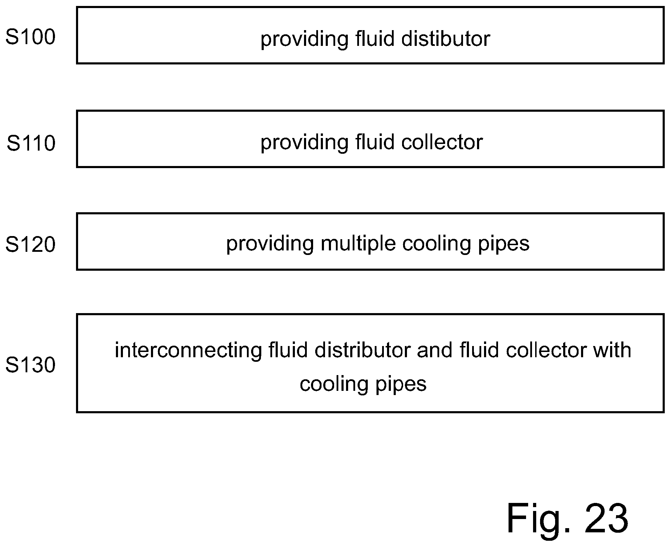

Subsequently will be described by way of example a method for manufacturing the heat exchanger 4 of the first embodiment. A flow chart of the method is shown in figure 23.

The method for manufacturing the heat exchanger 4 of the first embodiment starts with step S100, which refers to providing the fluid distributor 8 for connection to the heat transport fluid supply line of the heat exchange circuit.

Step S110 refers to providing the fluid collector 10 for connection to a heat transport fluid return line of the heat exchange circuit.

The fluid distributor 8 and the fluid collector 10 are provided by means of an injection molding process with a PP material or a TPE material, particularly a TPV material. The fluid distributor 8 and the fluid collector 10 are both provided with a base body 16 and a separate cover 17, as discussed above with respect to the fluid distributor 8 and the fluid collector 10 of figure 7. The fluid distributor 8 and the fluid collector 10 are provided with an identical structure, so that the fluid distributor 8 and the fluid collector 10 can be interchanged. Only a single kind of device has to be manufactured.

The injection molding process for providing the fluid distributor 8 and the fluid collector 10 is performed using a plastic material, which is transparent for laser irradiation used for laser welding.

Step S120 refers to providing multiple heat exchanger channels 5. The heat exchanger channels 5 are provided by performing an extrusion step using a plastic base material.

Different extrusion techniques are known, which can be applied. In particular, the extrusion step is performed as a continuous extrusion step for providing a continuous heat exchanger channel 5. The individual heat exchanger channels 5 are cut from the continuous heat exchanger channel 5. Hence, the heat exchanger channels 5 are provided with identical structures.

The plastic base material used in the extruding step is a thermoplastic polymer material. According to the first embodiment, a thermoplastic vulcanizate material (TPV) is selected as plastic base material.

The heat exchanger channels 5 comprise a thermally conductive filler material, which is mixed with the plastic base material prior to performing the extrusion step. In this embodiment, nitride powder is used as thermally conductive filler material, which is an electrically isolating filler material in the plastic base material. The thermally conductive filler material is mixed to the plastic base material to provide a composition comprising between a 30% and a 40% of the filler material.

Step S130 refers to interconnecting the fluid distributor 8 and the fluid collector 10 with the heat exchanger channels 5, thereby providing a passage way for the heat transport fluid from the fluid distributor 8 to the fluid collector 10.

Hence, in detail, the heat exchanger channels 5 are first connected to the connection ports 18 of the fluid distributor 8 and the fluid collector 10 so that the heat exchanger channels 5 encompass the protruding tube portions 19 from outside, as already discussed with respect to e.g. figure 8.

The fluid distributor 8 and the fluid collector 10 are interconnected with the heat exchanger channels 5 by means of laser welding. Laser welding is performed, as shown in figure 9, with a laser welding apparatus 30. Laser welding is performed by transmitting laser irradiation 31 from an inner side of the fluid distributor 8 and the fluid collector 10, respectively, into the connection ports 18, which melts material of the heat exchanger channels 5 at respective contact surfaces with the protruding tube portions 19. The laser welding from the inner side of the fluid distributor 8 and the fluid collector 10 can be seen in more detail in figure 10. Afterwards, the cover 17 is placed onto the base body 16 of the respective fluid distributor 8 or fluid collector 10. The base body 16 and the cover 17 are bonded, e.g. using laser welding, to provide the fluid distributor 8 and/or the fluid collector 10 in a closed configuration to enable circulation of the heat transport fluid.

The described method is modified for manufacturing the heat exchanger channel 5 with the two-layer structure comprising the inner layer 13 and the outer layer 14 according to the second embodiment. Hence, in accordance with the second embodiment, step S120 is modified so that the extrusion step of the base material containing the thermally conductive filler material is performed as a co-extrusion step of the inner layer 13 and the outer layer 14 of the heat exchanger channel 5. The inner layer 13 and the outer layer 14 both comprise TPV as plastic base material. The inner layer 13 comprises the graphite powder as filler material and the outer layer 14 comprises the nitride as filler material. The thermally conductive filler material is mixed individually to the plastic base material to provide a composition comprising between a 30% and a 40% of the filler material for the inner layer 13 and the outer layer 14. The inner layer 13 and the outer layer 14 are directly bonded to each other in the co-extrusion step of the inner layer 13 and the outer layer 14.

The described method is further modified for manufacturing the heat exchanger channel 5 with the two-layer structure comprising the inner layer 13 and the outer layer 14 according to the third embodiment of figure 6. Hence, in accordance with the third embodiment, step S120 is further modified compared to the second embodiment so that the co-extrusion step of the heat exchanger channel 5 with the inner layer 13 and the outer layer 14 further comprises providing the bonding layer 15 between the inner layer 13 and the outer layer 14. The bonding layer 15 is coextruded together with the inner layer 13 and the outer layer 14. The inner layer 13 is provided with TPV as plastic base material and a graphite powder as filler material, and the outer layer 14 is provided with polyethylene terephthalate (PET) as plastic base material. The respective filler material is provided in the inner layer 13 with a composition comprising between a 30% and a 40% of the filler material. The inner layer 13 and the outer layer 14 are directly bonded to each other in the co-extrusion step of the inner layer 13 and the outer layer 14 via the bonding layer 15.

The described method can be further modified for manufacturing the heat exchanger 4 with the fluid distributor 8 and the fluid collector 10 being compressible in accordance with the heat exchanger 4 of the fourth embodiment. Hence, a respective plastic base material has to be chosen in steps S100 and S110.

In order to provide the cooling tubes 5 of the fifth to tenth embodiment, step S120 is modified to performing a co-extrusion step of the heat exchanger channels 5 with the reinforcing elements 26. The reinforcing elements 26 are extruded using a different material compared to the heat exchanger channels 5 themselves, as discussed above, to define a stiffness and/or rigidity of the heat exchanger channels 5. The reinforcing elements 26 are co-extruded with the heat exchanger channels 5 using e.g. a TPE material.

The co-extrusion step of the heat exchanger channels 5 with the reinforcing elements 26 can be performed together with the co-extrusion step of the heat exchanger channels 5 with the inner layer 13 and the outer layer 14. Hence, a further degree of freedom can be added to the manufacturing step of manufacturing the heat exchanger channels 5 with the reinforcing elements 26 and/or the stiffening structures.

Furthermore, according to the tenth embodiment, also step S130 is modified in respect to the laser welding of the heat exchanger channels 5 to the connection ports 18, as shown in figure 18 and 19. The protruding tube portions 19 of the fluid distributor 8 and the fluid collector 10 encompass the heat exchanger channels 5. Since the protruding tube portions 19 are made of a material, which is transparent for laser irradiation used for laser welding, the laser irradiation can be applied from outside to heat and partially melt the material of the heat exchanger channels 5 in the connection area 22 to create the welding connection.

### List of reference numerals

- 1: traction battery
- 2: battery housing
- 3: battery cell
- 4: heat exchanger
- 5: heat exchanger channel
- 6: contact surface
- 7: thermal contact element
- 8: fluid distributor
- 9: inlet port
- 10: fluid collector
- 11: outlet port
- 12: mono-layer
- 13: inner layer
- 14: outer layer
- 15: bonding layer
- 16: base body
- 17: cover
- 18: connection port
- 19: protruding tube portion
- 20: outer wall
- 21: internal wall
- 22: connection area
- 23: side wall
- 24: intermediate interconnecting element
- 25: opposite surface
- 26: reinforcing element
- 27: flow direction
- 28: guide element
- 29: gap
- 30: laser welding apparatus
- 31: laser irradiation

## Claims

1. Heat exchanger (4), in particular for use in a traction battery (1) of an electric vehicle, comprising
at least one fluid distributor (8) for connection to a heat transport fluid supply line of a heat exchange circuit,
at least one fluid collector (10) for connection to a heat transport fluid return line of the heat exchange circuit, and
multiple heat exchanger channels (5), which interconnect the at least one fluid distributor (8) and the at least one fluid collector (10) and which provide a passage way for a heat transport fluid from the at least one fluid distributor (8) to the at least one fluid collector (10), wherein
the heat exchanger channels (5) are provided with at least one common contact surface (6) for contacting a heat exchange target, in particular battery cells (3) of the traction battery (1),
wherein the heat exchanger is **characterized in that**
- the heat exchanger channels (5) are compressible upon exertion of a force in a direction perpendicular to the contact surface (6) from their normal shape to a compressed shape, and
- the heat exchanger (4) is provided for being mounted with the heat exchanger channels (5) compressed into their compressed shape,
and **in that,**
the heat exchanger channels (5) comprise reinforcing elements (26) to increase a stiffness of the heat exchanger channels (5) against the compression from the normal shape to the compressed shape.

2. Heat exchanger (4) according to claim 1, **characterized in that,**
the heat exchanger channels (5) are provided with two common contact surfaces (6) for contacting heat exchange targets, in particular battery cells (3) of the traction battery (1), and
the two common contact surfaces (6) are provided at opposite sides of the heat exchanger (4).

3. Heat exchanger (4) according to claim 1 or 2, **characterized in that,**
the heat exchanger channels (5) comprise a plastic base material, in particular a thermoplastic polymer material.

4. Heat exchanger (4) according to claim 3, **characterized in that,**
the heat exchanger channels (5) comprise a thermally conductive filler material, preferably an electrically isolating filler material.

5. Heat exchanger (4) according to claim 4, **characterized in that,**
the heat exchanger channels (5) are provided with a two-layer structure with an inner layer (13) having a plastic base material comprising an electrically conductive filler material, and an outer layer (14) having a plastic base material comprising an electrically isolating filler material or no filler material.

6. Heat exchanger (4) according to claim 5, **characterized in that,**
the inner layer (13) and the outer layer (14) comprise different plastic base materials and the heat exchanger channels (5) comprise a bonding layer (15) bonding the inner layer (13) and the outer layer (14).

7. Heat exchanger (4) according to claim 1, **characterized in that,**
the reinforcing elements (26) are provided as ribs extending in parallel to a flow direction (27) of the heat transport fluid within the heat exchanger channels (5), wherein
the ribs are arranged with an orientation essentially perpendicular to the contact surface (6) extending towards an opposite site of the heat exchanger channels (5), and/or
the ribs are arranged with an angled orientation extending from an area of the contact surface (6) towards an opposite site of the heat exchanger channels (5), and/or
the ribs are provided with an x-shape at an inner face of the heat exchanger channels (5) in an area of the contact surface (6).

8. Heat exchanger (4) according to any preceding claim, **characterized in that,**
side walls (23) of the heat exchanger channels (5), which extend from the respective contact surface(s) (6), preferably in a perpendicular direction, comprise stiffening structures, wherein
the side walls (23) are provided integrally with the stiffening structures, and/or
the stiffening structures are provided at the side walls (23) at an inner face of the heat exchanger channels (5), and/or
the stiffening structures are provided at the side walls (23) at an outer face of the heat exchanger channels (5).

9. Heat exchanger (4) according to any of claims 6 to 8, **characterized in that,**
the reinforcing elements (26) and/or the stiffening structures comprise a reinforcing material like PP or TPV, in particular without thermally conductive fillers, which has an increased stiffness compared to a base material of the heat exchanger channels (5).

10. Heat exchanger (4) according to any preceding claim, **characterized in that,**
the at least one fluid distributor (8) and/or the at least one fluid collector (10) are provided with connection ports (18) for connection to the heat exchanger channels (5) in a connection area (22), wherein
the connection ports (18) and the heat exchanger channels (5) overlap in the connection area (22);
wherein optionally
the at least one fluid distributor (8) and/or the at least one fluid collector (10) are compressible upon exertion of a force from their normal shape to a compressed shape, and
the connection ports (18) are encompassed by the heat exchanger channels (5) in the connection area (22) to overlap the connection area (22) from outside.

11. Heat exchanger (4) according to any preceding claim, **characterized in that,**
the at least one fluid distributor (8) and/or the at least one fluid collector (10) are essentially not compressible upon exertion of a force, and
the connection ports (18) are encompassed by the heat exchanger channels (5) in the connection area (22) to overlap the connection area (22) from outside;
and/or
the normal shape of the heat exchanger channels (5) is an essentially circular or elliptical shape and the compressed shape of the heat exchanger channels (5) is a flattened shape with a flat contact surface (6) and an essentially flat opposite surface (25) and convex side walls (23) extending therebetween, or
the normal shape of the heat exchanger channels (5) is a shape with a flat contact surface (6) and an essentially flat opposite surface (25) and convex side walls (23) extending therebetween and the compressed shape of the heat exchanger channels (5) is a further flattened shape with a reduced distance between the flat contact surface (6) and the flat opposite surface (25) compared to the normal shape.

12. Traction battery (1) of an electric vehicle, comprising a battery housing (2),
multiple battery cells (3) arranged in the battery housing (2), and
at least one heat exchanger (4) according to any of claims 1 to 14, wherein
the multiple battery cells (3) are in thermal contact with the heat exchanger channels (5) of the at least one heat exchanger (4) at the at least one common contact surface (6),
the heat exchanger channels (5) of the at least one heat exchanger (4) are transferred from their normal shape into the compressed shape when mounted between the battery cells (3) or between the battery cells (3) and the battery housing (2),
**characterized in that,**
the heat exchanger channels (5) comprise reinforcing elements (26) to increase a stiffness of the heat exchanger channels (5) against the compression from the normal shape to the compressed shape.

13. Method for manufacturing the heat exchanger (4) of any of claims 1 to 11, comprising the steps of
providing the at least one fluid distributor (8) for connection to a heat transport fluid supply line of a heat exchange circuit,
providing the at least one fluid collector (10) for connection to a heat transport fluid return line of the heat exchange circuit,
providing multiple heat exchanger channels (5), and
interconnecting the at least one fluid distributor (8) and the at least one fluid collector (10) with the multiple heat exchanger channels (5), thereby providing a passage way for the heat transport fluid from the at least one fluid distributor (8) to the at least one fluid collector (10), wherein
providing the multiple heat exchanger channels (5) comprises performing an extrusion step of a plastic base material for manufacturing the multiple heat exchanger channels (5).

14. Method according to claim 13, **characterized in that,**
the step of performing an extrusion step of a plastic base material comprises performing an extrusion step of the base material containing a thermally conductive filler material, in particular with a composition comprising up to a 50% of the filler material, preferably with a composition comprising up to a 40% of the filler material, further preferred with a composition comprising more than a 20% of the filler material, still further preferred with a composition comprising more than a 30% of the filler material.

15. Method according to claim 14, **characterized in that,**
the step of performing an extrusion step of the base material containing a thermally conductive filler material comprises performing a co-extrusion step of the heat exchanger channels (5) with an inner layer (13) and an outer layer (14), wherein the inner layer (13) comprises a plastic base material and a thermally conductive filler material, which is thermally and electrically conductive, and the outer layer (14) comprises a plastic base material and a thermally conductive filler material, which is thermally conductive but not electrically conductive, or only a plastic base material without a filler material.

16. Method according to preceding claim 15, **characterized in that,**
the step of performing a co-extrusion step of the heat exchanger channel (5) with an inner layer (13) and an outer layer (14) comprises providing a bonding layer (15) between the inner layer (13) and the outer layer (14).

17. Method according to any of preceding claims 13 to 16, **characterized in that,**
the step of performing an extrusion step of a plastic base material for manufacturing the multiple heat exchanger channels (5) comprises a continuous extrusion step for providing a continuous heat exchanger channel (5) and cutting the heat exchanger channels (5) from the continuous heat exchanger channel (5); and/or
the step of providing the multiple heat exchanger channels (5) comprises performing a co-extrusion step of the heat exchanger channels (5) with reinforcing elements (26) and/or stiffening structures.

18. Method according to any of preceding claims 13 to 17, **characterized in that,**
the step of providing the at least one fluid distributor (8) comprises molding, in particular injection molding, the at least one fluid distributor (8), and/or
the step of providing the at least one fluid collector (10) comprises molding, in particular injection molding, the at least one fluid collector (10).

19. Method according to any of preceding claims 13 to 18, **characterized in that,**
the step of interconnecting the at least one fluid distributor (8) and/or the at least one fluid collector (10) with the multiple heat exchanger channels (5) comprises laser welding of the heat exchanger channels (5) to the at least one fluid distributor (8) and/or the at least one fluid collector (10).

20. Method according to preceding claim 19 in combination with claim 18, **characterized in that,**
the steps of molding, in particular injection molding, the at least one fluid distributor (8) and/or molding, in particular injection molding, the at least one fluid collector (10) comprise molding, in particular injection molding, the at least one fluid distributor (8) and/or the at least one fluid collector (10) from plastic material, which is transparent for laser irradiation used for laser welding, and
the step of laser welding of the heat exchanger channels (5) to the at least one fluid distributor (8) and/or the at least one fluid collector (10) comprises laser welding the heat exchanger channels (5) to the at least one fluid distributor (8) and/or the at least one fluid collector (10) through the at least one fluid distributor (8) and/or the at least one fluid collector (10).

## Patentansprüche

1. Wärmetauscher (4), insbesondere zur Verwendung in einer Antriebsbatterie (1) eines Elektrofahrzeugs, aufweisend
mindestens einen Fluidverteiler (8) zum Anschluss an eine Zufuhrleitung für ein Wärmeträgerfluid eines Wärmetauscherkreislaufs,
mindestens einen Fluidsammler (10) zum Anschluss an eine Rücklaufleitung für Wärmeträgerfluid des Wärmetauscherkreislaufs und
mehrere Wärmetauscherkanäle (5), die den mindestens einen Fluidverteiler (8) und den mindestens einen Fluidsammler (10) miteinander verbinden und die einen Durchgang für ein Wärmeträgerfluid vom mindestens einen Fluidverteiler (8) zum mindestens einen Fluidsammler (10) bilden, wobei
die Wärmetauscherkanäle (5) mit mindestens einer gemeinsamen Kontaktfläche (6) zum Kontaktieren eines Wärmeaustauschobjekts, insbesondere von Batteriezellen (3) der Antriebsbatterie (1), versehen sind,
wobei der Wärmetauscher **dadurch gekennzeichnet ist, dass**
- die Wärmetauscherkanäle (5) bei Ausübung einer Kraft in einer Richtung senkrecht zur Kontaktfläche (6) von ihrer Normalform in eine komprimierte Form komprimierbar sind, und
- der Wärmetauscher (4) so ausgebildet ist, dass er mit den in ihre komprimierte Form komprimierten Wärmetauscherkanälen (5) montiert werden kann,
und dadurch, dass die Wärmetauscherkanäle (5) Verstärkungselemente (26) aufweisen, um die Steifigkeit der Wärmetauscherkanäle (5) gegenüber der Kompression von der Normalform in die komprimierte Form zu erhöhen.

2. Wärmetauscher (4) nach Anspruch 1, **dadurch gekennzeichnet, dass**
die Wärmetauscherkanäle (5) mit zwei gemeinsamen Kontaktflächen (6) zum Kontaktieren von Wärmeaustauschzielen, insbesondere Batteriezellen (3) der Antriebsbatterie (1), versehen sind, und
die beiden gemeinsamen Kontaktflächen (6) sind an gegenüberliegenden Seiten des Wärmetauschers (4) angeordnet.

3. Wärmetauscher (4) nach Anspruch 1 oder 2, **dadurch gekennzeichnet, dass**
die Wärmetauscherkanäle (5) weisen ein Kunststoffgrundmaterial, insbesondere ein thermoplastisches Polymermaterial, auf.

4. Wärmetauscher (4) nach Anspruch 3, **dadurch gekennzeichnet, dass**
die Wärmetauscherkanäle (5) weisen ein wärmeleitendes Füllmaterial, vorzugsweise ein elektrisch isolierendes Füllmaterial, auf.

5. Wärmetauscher (4) nach Anspruch 4, **dadurch gekennzeichnet, dass**
die Wärmetauscherkanäle (5) mit einer zweischichtigen Struktur versehen sind, mit einer Innenschicht (13) aufweisend ein Kunststoff-Grundmaterial, das ein elektrisch leitfähiges Füllmaterial enthält, und einer Außenschicht (14) aufweisend ein Kunststoff-Grundmaterial, das ein elektrisch isolierendes Füllmaterial oder kein Füllmaterial enthält.

6. Wärmetauscher (4) nach Anspruch 5, **dadurch gekennzeichnet, dass**
die innere Schicht (13) und die äußere Schicht (14) unterschiedliche Kunststoff-Grundmaterialien aufweisen und die Wärmetauscherkanäle (5) eine Verbindungsschicht (15) aufweisen, die die innere Schicht (13) und die äußere Schicht (14) verbindet.

7. Wärmetauscher (4) nach Anspruch 1, **dadurch gekennzeichnet, dass**
die Verstärkungselemente (26) als Rippen ausgebildet sind, die sich parallel zu einer Strömungsrichtung (27) des Wärmeträgerfluids innerhalb der Wärmetauscherkanäle (5) erstrecken, wobei die Rippen mit einer im Wesentlichen senkrecht zur Kontaktfläche (6) verlaufenden Ausrichtung angeordnet sind, die sich zu einer gegenüberliegenden Seite der Wärmetauscherkanäle (5) erstreckt, und/oder
die Rippen in einer abgewinkelten Ausrichtung angeordnet sind, die sich von einem Bereich der Kontaktfläche (6) zu einer gegenüberliegenden Seite der Wärmetauscherkanäle (5) erstreckt, und/oder
Die Rippen sind an einer Innenseite der Wärmetauscherkanäle (5) in einem Bereich der Kontaktfläche (6) mit einer X-Form versehen.

8. Wärmetauscher (4) nach einem der vorstehenden Ansprüche, **dadurch gekennzeichnet, dass**
die Seitenwände (23) der Wärmetauscherkanäle (5), die sich von der jeweiligen Kontaktfläche (6) vorzugsweise in senkrechter Richtung erstrecken, Versteifungsstrukturen aufweisen, wobei
die Seitenwände (23) einstückig mit den Versteifungsstrukturen ausgebildet sind, und/oder
die Versteifungsstrukturen an den Seitenwänden (23) an einer Innenseite der Wärmetauscherkanäle (5) vorgesehen sind, und/oder
die Versteifungsstrukturen an den Seitenwänden (23) an einer Außenseite der Wärmetauscherkanäle (5) vorgesehen sind.

9. Wärmetauscher (4) nach einem der Ansprüche 6 bis 8, **dadurch gekennzeichnet, dass**
die Verstärkungselemente (26) und/oder die Versteifungsstrukturen ein Verstärkungsmaterial wie PP oder TPV, insbesondere ohne wärmeleitende Füllstoffe, aufweisen, das im Vergleich zu einem Grundmaterial der Wärmetauscherkanäle (5) eine erhöhte Steifigkeit aufweist.

10. Wärmetauscher (4) nach einem der vorstehenden Ansprüche, **dadurch gekennzeichnet, dass**
der mindestens eine Fluidverteiler (8) und/oder der mindestens eine Fluidsammler (10) in einem Anschlussbereich (22) mit Anschlussöffnungen (18) zum Anschluss an die Wärmetauscherkanäle (5) versehen sind, wobei
sich die Anschlussöffnungen (18) und die Wärmetauscherkanäle (5) im Anschlussbereich (22) überlappen;
wobei optional
der mindestens eine Fluidverteiler (8) und/oder der mindestens eine Fluidsammler (10) bei Ausübung einer Kraft von ihrer Normalform in eine komprimierte Form komprimierbar sind, und
Die Anschlussöffnungen (18) werden im Anschlussbereich (22) von den Wärmetauscherkanälen (5) umschlossen, sodass sie den Anschlussbereich (22) von außen überlappen.

11. Wärmetauscher (4) nach einem der vorstehenden Ansprüche, **dadurch gekennzeichnet, dass**
der mindestens eine Fluidverteiler (8) und/oder der mindestens eine Fluidsammler (10) bei Krafteinwirkung im Wesentlichen nicht komprimierbar sind, und
die Anschlussöffnungen (18) im Anschlussbereich (22) von den Wärmetauscherkanälen (5) umschlossen sind, sodass sie den Anschlussbereich (22) von außen überlappen;
und/oder
die Normalform der Wärmetauscherkanäle (5) eine im Wesentlichen kreisförmige oder elliptische Form ist und die komprimierte Form der Wärmetauscherkanäle (5) eine abgeflachte Form mit einer flachen Kontaktfläche (6) und einer im Wesentlichen flachen Gegenfläche (25) sowie dazwischen verlaufenden konvexen Seitenwänden (23) ist, oder
die Normalform der Wärmetauscherkanäle (5) eine Form mit einer flachen Kontaktfläche (6) und einer im Wesentlichen flachen en Gegenfläche (25) sowie dazwischen verlaufenden konvexen Seitenwänden (23) ist und die komprimierte Form der Wärmetauscherkanäle (5) eine weiter abgeflachte Form mit einem im Vergleich zur Normalform verringerten Abstand zwischen der flachen Kontaktfläche (6) und der flachen Gegenfläche (25) ist.

12. Antriebsbatterie (1) eines Elektrofahrzeugs, aufweisend ein Batteriegehäuse (2),
mehrere im Batteriegehäuse (2) angeordnete Batteriezellen (3) und
mindestens einen Wärmetauscher (4) gemäß einem der Ansprüche 1 bis 14, wobei die mehreren Batteriezellen (3) an der mindestens einen gemeinsamen Kontaktfläche (6) in thermischem Kontakt mit den Wärmetauscherkanälen (5) des mindestens einen Wärmetauschers (4) stehen,
die Wärmetauscherkanäle (5) des mindestens einen Wärmetauschers (4) werden beim Einbau zwischen den Batteriezellen (3) oder zwischen den Batteriezellen (3) und dem Batteriegehäuse (2) von ihrer Normalform in die komprimierte Form überführt,
**dadurch gekennzeichnet, dass**
die Wärmetauscherkanäle (5) Verstärkungselemente (26) aufweisen, um die Steifigkeit der Wärmetauscherkanäle (5) gegenüber der Kompression von der Normalform in die komprimierte Form zu erhöhen.

13. Verfahren zur Herstellung des Wärmetauschers (4) nach einem der Ansprüche 1 bis 11, aufweisend die Schritte
Bereitstellen des mindestens einen Fluidverteilers (8) zum Anschluss an eine Zufuhrleitung für ein Wärmeträgerfluid eines Wärmetauscherkreislaufs,
Bereitstellen des mindestens einen Fluidsammlers (10) zum Anschluss an eine Rücklaufleitung für Wärmeträgerfluid des Wärmetauscherkreislaufs,
Bereitstellen mehrerer Wärmetauscherkanäle (5) und
Verbinden des mindestens einen Fluidverteilers (8) und des mindestens einen Fluidsammlers (10) mit den mehreren Wärmetauscherkanälen (5), wodurch ein Durchgang für das Wärmeträgerfluid vom mindestens einen Fluidverteiler (8) zum mindestens einen Fluidsammler (10) bereitgestellt wird,
wobei das Bereitstellen der mehreren Wärmetauscherkanäle (5) das Durchführen eines Extrusionsschritts eines Kunststoff-Grundmaterials zur Herstellung der mehreren Wärmetauscherkanäle (5) umfasst.

14. Verfahren nach Anspruch 13, **dadurch gekennzeichnet, dass**
der Schritt des Durchführens eines Extrusionsschritts eines Kunststoff-Grundmaterials das Durchführen einen Extrusionsschritt des Grundmaterials umfasst, das ein wärmeleitendes Füllmaterial enthält, insbesondere mit einer Zusammensetzung, die bis zu 50 % des Füllmaterials aufweist, vorzugsweise mit einer Zusammensetzung, die bis zu 40 % des Füllmaterials aufweist, noch bevorzugter mit einer Zusammensetzung, die mehr als 20 % des Füllmaterials aufweist, und am meisten bevorzugt mit einer Zusammensetzung, die mehr als 30 % des Füllmaterials aufweist.

15. Verfahren nach Anspruch 14, **dadurch gekennzeichnet, dass**
der Schritt des Durchführens eines Extrusionsschritts des ein wärmeleitendes Füllmaterial enthaltenden Grundmaterials das Durchführen einen Coextrusionsschritt der Wärmetauscherkanäle (5) mit einer Innenschicht (13) und einer Außenschicht auf (14) umfasst, wobei die Innenschicht (13) ein Kunststoff-Grundmaterial und ein wärmeleitendes Füllmaterial aufweist, das wärmeleitend und elektrisch leitend ist, und die Außenschicht (14) ein Kunststoff-Grundmaterial und ein wärmeleitendes Füllmaterial aufweist, das wärmeleitend, aber nicht elektrisch leitend ist, oder nur ein Kunststoff-Grundmaterial ohne Füllmaterial.

16. Verfahren nach dem vorstehenden Anspruch 15, **dadurch gekennzeichnet, dass**
der Schritt des Durchführens eines Coextrusionsschritts des Wärmetauscherkanals (5) mit einer Innenschicht (13) und einer Außenschicht (14) das Bereitstellen einer Verbindungsschicht (15) zwischen der Innenschicht (13) und der Außenschicht (14) umfasst.

17. Verfahren nach einem der vorstehenden Ansprüche 13 bis 16, **dadurch gekennzeichnet, dass**
der Schritt des Durchführens eines Extrusionsschritts eines Kunststoff-Grundmaterials zur Herstellung der mehreren Wärmetauscherkanäle (5) einen kontinuierlichen Extrusionsschritt zum Bereitstellen eines kontinuierlichen Wärmetauscherkanals (5) und das Schneiden der Wärmetauscherkanäle (5) aus dem kontinuierlichen Wärmetauscherkanal (5) umfasst; und/oder
der Schritt des Bereitstellens der mehreren Wärmetauscherkanäle (5) das Durchführen eines Coextrusionsschritts der Wärmetauscherkanäle (5) mit Verstärkungselementen (26) und/oder Versteifungsstrukturen umfasst.

18. Verfahren nach einem der vorstehenden Ansprüche 13 bis 17, **dadurch gekennzeichnet, dass**
der Schritt des Bereitstellens des mindestens einen Fluidverteilers (8) das Formen, insbesondere das Spritzgießen, des mindestens einen Fluidverteilers (8) umfasst, und/oder
der Schritt des Bereitstellens des mindestens einen Fluidsammlers (10) das Formen, insbesondere das Spritzgießen, des mindestens einen Fluidsammlers (10) umfasst.

19. Verfahren nach einem der vorstehenden Ansprüche 13 bis 18, **dadurch gekennzeichnet, dass**
der Schritt des Verbindens des mindestens einen Fluidverteilers (8) und/oder der Schritt des Verbindens des mindestens einen Fluidsammlers (10) mit den mehreren Wärmetauscherkanälen (5) das Laserschweißen der Wärmetauscherkanäle (5) an den mindestens einen Fluidverteiler (8) und/oder den mindestens einen Fluidsammler (10) umfasst.

20. Verfahren nach dem vorstehenden Anspruch 19 in Kombination mit Anspruch 18, **dadurch gekennzeichnet, dass**
die Schritte des Formens, insbesondere des Spritzgießens, des mindestens einen Fluidverteilers (8) und/oder des Formens, insbesondere des Spritzgießens, des mindestens einen Fluidsammlers (10) das Formen, insbesondere das Spritzgießen, des mindestens einen Fluidverteilers (8) und/oder des mindestens einen Fluidsammlers (10) umfasst, der für die zum Laserschweißen verwendete Laserbestrahlung durchlässig ist, und
der Schritt des Laserschweißens der Wärmetauscherkanäle (5) an den mindestens einen Fluidverteiler (8) und/oder den mindestens einen Fluidsammler (10) das Laserschweißen der Wärmetauscherkanäle (5) an den mindestens einen Fluidverteiler (8) und/oder den mindestens einen Fluidsammler (10) durch den mindestens einen Fluidverteiler (8) und/oder den mindestens einen Fluidsammler (10) umfasst.

## Revendications

1. Échangeur de chaleur (4), en particulier destiné à être utilisé dans une batterie de traction (1) d'un véhicule électrique, comprenant
au moins un distributeur de fluide (8) pour un raccordement à une conduite d'alimentation en fluide caloporteur d'un circuit d'échange de chaleur,
au moins un collecteur de fluide (10) pour un raccordement à une conduite de retour de fluide caloporteur du circuit d'échange de chaleur, et
de multiples canaux (5) d'échangeur de chaleur, qui raccordent entre eux l'au moins un distributeur de fluide (8) et l'au moins un collecteur de fluide (10) et qui fournissent un passage pour un fluide caloporteur depuis l'au moins un distributeur de fluide (8) vers l'au moins un collecteur de fluide (10), dans lequel
les canaux (5) d'échangeur de chaleur sont pourvus d'au moins une surface de contact (6) commune pour entrer en contact avec une cible d'échange de chaleur, en particulier des cellules de batterie (3) de la batterie de traction (1), dans lequel l'échangeur de chaleur est **caractérisé en ce que**
- les canaux (5) d'échangeur de chaleur sont compressibles lorsqu'une force est exercée dans une direction perpendiculaire à la surface de contact (6), de leur forme normale à une forme comprimée, et
- l'échangeur de chaleur (4) est fourni pour être monté avec les canaux (5) d'échangeur de chaleur comprimés dans leur forme comprimée, et **en ce que**,
les canaux (5) d'échangeur de chaleur comprennent des éléments de renforcement (26) pour augmenter une rigidité des canaux (5) d'échangeur de chaleur contre la compression de la forme normale à la forme comprimée.

2. Échangeur de chaleur (4) selon la revendication 1, **caractérisé en ce que,**
les canaux (5) d'échangeur de chaleur sont pourvus de deux surfaces de contact (6) communes pour entrer en contact avec des cibles d'échange de chaleur, en particulier des cellules de batterie (3) de la batterie de traction (1), et
les deux surfaces de contact (6) communes sont fournies sur des côtés opposés de l'échangeur de chaleur (4).

3. Échangeur de chaleur (4) selon la revendication 1 ou 2, **caractérisé en ce que,**
les canaux (5) d'échangeur de chaleur comprennent un matériau de base en plastique, en particulier un matériau polymère thermoplastique.

4. Échangeur de chaleur (4) selon la revendication 3, **caractérisé en ce que,**
les canaux (5) d'échangeur de chaleur comprennent un matériau de remplissage thermoconducteur, de préférence un matériau de remplissage électriquement isolant.

5. Échangeur de chaleur (4) selon la revendication 4, **caractérisé en ce que,**
les canaux (5) d'échangeur de chaleur sont pourvus d'une structure à deux couches avec une couche interne (13) ayant un matériau de base en plastique comprenant un matériau de remplissage électroconducteur, et une couche externe (14) ayant un matériau de base en plastique comprenant un matériau de remplissage électriquement isolant ou pas de matériau de remplissage.

6. Échangeur de chaleur (4) selon la revendication 5, **caractérisé en ce que,**
la couche interne (13) et la couche externe (14) comprennent différents matériaux de base en plastique et les canaux (5) d'échangeur de chaleur comprennent une couche de liaison (15) liant la couche interne (13) et la couche externe (14).

7. Échangeur de chaleur (4) selon la revendication 1, **caractérisé en ce que,**
les éléments de renforcement (26) sont fournis sous forme de nervures s'étendant parallèlement à une direction d'écoulement (27) du fluide caloporteur au sein des canaux (5) d'échangeur de chaleur, dans lequel
les nervures sont agencées avec une orientation essentiellement perpendiculaire à la surface de contact (6) s'étendant vers un site opposé des canaux (5) d'échangeur de chaleur, et/ou
les nervures sont agencées avec une orientation angulaire s'étendant d'une zone de la surface de contact (6) vers un site opposé des canaux (5) d'échangeur de chaleur, et/ou
les nervures sont pourvues d'une forme en X au niveau d'une face interne des canaux (5) d'échangeur de chaleur dans une zone de la surface de contact (6).

8. Échangeur de chaleur (4) selon l'une quelconque revendication précédente, **caractérisé en ce que,**
des parois latérales (23) des canaux (5) d'échangeur de chaleur, qui s'étendent à partir de la ou des surface(s) de contact (6) respective(s), de préférence dans une direction perpendiculaire, comprennent des structures de raidissement, dans lequel
les parois latérales (23) sont pourvues intégralement des structures de raidissement, et/ou
les structures de raidissement sont fournies au niveau des parois latérales (23) au niveau d'une face interne des canaux (5) d'échangeur de chaleur, et/ou
les structures de raidissement sont fournies au niveau des parois latérales (23) au niveau d'une face externe des canaux (5) d'échangeur de chaleur.

9. Échangeur de chaleur (4) selon l'une quelconque des revendications 6 à 8, **caractérisé en ce que,**
les éléments de renforcement (26) et/ou les structures de raidissement comprennent un matériau de renforcement de type PP ou TPV, en particulier sans charges thermoconductrices, qui a une rigidité accrue par comparaison avec un matériau de base des canaux (5) d'échangeur de chaleur.

10. Échangeur de chaleur (4) selon l'une quelconque revendication précédente, **caractérisé en ce que,**
l'au moins un distributeur de fluide (8) et/ou l'au moins un collecteur de fluide (10) sont pourvus d'orifices de raccordement (18) pour le raccordement aux canaux (5) d'échangeur de chaleur dans une zone de raccordement (22), dans lequel
les orifices de raccordement (18) et les canaux (5) d'échangeur de chaleur se chevauchent dans la zone de raccordement (22) ;
dans lequel facultativement
l'au moins un distributeur de fluide (8) et/ou l'au moins un collecteur de fluide (10) sont compressibles lorsqu'une force est exercée, de leur forme normale à une forme comprimée, et
les orifices de raccordement (18) sont englobés par les canaux (5) d'échangeur de chaleur dans la zone de raccordement (22) pour chevaucher la zone de raccordement (22) depuis l'extérieur.

11. Échangeur de chaleur (4) selon l'une quelconque revendication précédente, **caractérisé en ce que,**
l'au moins un distributeur de fluide (8) et/ou l'au moins un collecteur de fluide (10) ne sont essentiellement pas compressibles lorsqu'une force est exercée, et
les orifices de raccordement (18) sont englobés par les canaux (5) d'échangeur de chaleur dans la zone de raccordement (22) pour chevaucher la zone de raccordement (22) depuis l'extérieur ;
et/ou
la forme normale des canaux (5) d'échangeur de chaleur est une forme essentiellement circulaire ou elliptique et la forme comprimée des canaux (5) d'échangeur de chaleur est une forme aplatie avec une surface de contact (6) plate et une surface opposée (25) essentiellement plate et des parois latérales (23) convexes s'étendant entre elles, ou
la forme normale des canaux (5) d'échangeur de chaleur est une forme avec une surface de contact (6) plate et une surface opposée (25) essentiellement plate et des parois latérales (23) convexes s'étendant entre elles et la forme comprimée des canaux (5) d'échangeur de chaleur est une forme davantage aplatie avec une distance réduite entre la surface de contact (6) plate et la surface opposée (25) plate par comparaison avec la forme normale.

12. Batterie de traction (1) d'un véhicule électrique, comprenant
un logement (2) de batterie,
de multiples cellules de batterie (3) agencées dans le logement (2) de batterie, et
au moins un échangeur de chaleur (4) selon l'une quelconque des revendications 1 à 14, dans laquelle
les multiples cellules de batterie (3) sont en contact thermique avec les canaux (5) d'échangeur de chaleur de l'au moins un échangeur de chaleur (4) au niveau de l'au moins une surface de contact (6) commune,
les canaux (5) d'échangeur de chaleur de l'au moins un échangeur de chaleur (4) sont transférés de leur forme normale à la forme comprimée lorsqu'ils sont montés entre les cellules de batterie (3) ou entre les cellules de batterie (3) et le logement (2) de batterie,
**caractérisée en ce que,**
les canaux (5) d'échangeur de chaleur comprennent des éléments de renforcement (26) pour augmenter une rigidité des canaux (5) d'échangeur de chaleur contre la compression de la forme normale à la forme comprimée.

13. Procédé de fabrication de l'échangeur de chaleur (4) selon l'une quelconque des revendications 1 à 11, comprenant les étapes consistant à
fournir l'au moins un distributeur de fluide (8) pour un raccordement à une conduite d'alimentation en fluide caloporteur d'un circuit d'échange de chaleur,
fournir l'au moins un collecteur de fluide (10) pour un raccordement à une conduite de retour de fluide caloporteur du circuit d'échange de chaleur,
fournir de multiples canaux (5) d'échangeur de chaleur, et
raccorder entre eux l'au moins un distributeur de fluide (8) et l'au moins un collecteur de fluide (10) aux multiples canaux (5) d'échangeur de chaleur, fournissant de ce fait une voie de passage pour le fluide caloporteur depuis l'au moins un distributeur de fluide (8) vers l'au moins un collecteur de fluide (10), dans lequel
la fourniture des multiples canaux (5) d'échangeur de chaleur comprend la réalisation d'une étape d'extrusion d'un matériau de base en plastique pour la fabrication des multiples canaux (5) d'échangeur de chaleur.

14. Procédé selon la revendication 13, **caractérisé en ce que,**
l'étape consistant à réaliser une étape d'extrusion d'un matériau de base en plastique comprend la réalisation d'une étape d'extrusion du matériau de base contenant un matériau de remplissage thermoconducteur, en particulier avec une composition comprenant jusqu'à 50 % du matériau de remplissage, de préférence avec une composition comprenant jusqu'à 40 % du un matériau de remplissage, préféré en outre avec une composition comprenant plus de 20 % du matériau de remplissage, de manière encore plus préférée avec une composition comprenant plus de 30 % du matériau de remplissage.

15. Procédé selon la revendication 14, **caractérisé en ce que,**
l'étape consistant à réaliser une étape d'extrusion du matériau de base contenant un matériau de remplissage thermoconducteur comprend la réalisation d'une étape de coextrusion des canaux (5) d'échangeur de chaleur avec une couche interne (13) et une couche externe (14), dans lequel la couche interne (13) comprend un matériau de base en plastique et un matériau de remplissage thermoconducteur, qui est thermoconducteur et électroconducteur, et la couche externe (14) comprend un matériau de base en plastique et un matériau de remplissage thermoconducteur, qui est thermoconducteur mais pas électroconducteur, ou seulement un matériau de base en plastique sans matériau de remplissage.

16. Procédé selon la revendication 15, **caractérisé en ce que,**
l'étape consistant à réaliser une étape de coextrusion du canal (5) d'échangeur de chaleur avec une couche interne (13) et une couche externe (14) comprend la fourniture d'une couche de liaison (15) entre la couche interne (13) et la couche externe (14).

17. Procédé selon l'une quelconque des revendications précédentes 13 à 16, **caractérisé en ce que,**
l'étape consistant à réaliser une étape d'extrusion d'un matériau de base en plastique pour la fabrication des multiples canaux (5) d'échangeur de chaleur comprend une étape d'extrusion continue pour fournir un canal (5) d'échangeur de chaleur continu et couper les canaux (5) d'échangeur de chaleur à partir du canal (5) d'échangeur de chaleur continu ; et/ou
l'étape consistant à fournir les multiples canaux (5) d'échangeur de chaleur comprend la réalisation d'une étape de coextrusion des canaux (5) d'échangeur de chaleur avec des éléments de renforcement (26) et/ou des structures de raidissement.

18. Procédé selon l'une quelconque des revendications précédentes 13 à 17, **caractérisé en ce que,**
l'étape consistant à fournir l'au moins un distributeur de fluide (8) comprend le moulage, en particulier le moulage par injection, de l'au moins un distributeur de fluide (8), et/ou
l'étape consistant à fournir l'au moins un collecteur de fluide (10) comprend le moulage, en particulier le moulage par injection, de l'au moins un collecteur de fluide (10).

19. Procédé selon l'une quelconque des revendications précédentes 13 à 18, **caractérisé en ce que,**
l'étape consistant à raccorder entre eux l'au moins un distributeur de fluide (8) et/ou l'au moins un collecteur de fluide (10) aux multiples canaux (5) d'échangeur de chaleur comprend le soudage laser des canaux (5) d'échangeur de chaleur à l'au moins un distributeur de fluide (8) et/ou à l'au moins un collecteur de fluide (10).

20. Procédé selon la revendication précédente 19 en combinaison avec la revendication 18, **caractérisé en ce que,**
les étapes consistant à mouler, en particulier mouler par injection, l'au moins un distributeur de fluide (8) et/ou mouler, en particulier mouler par injection, l'au moins un collecteur de fluide (10) comprennent le moulage, en particulier le moulage par injection, de l'au moins un distributeur de fluide (8) et/ou l'au moins un collecteur de fluide (10) à partir d'un matériau en plastique, qui est transparent pour l'irradiation laser utilisée pour le soudage laser, et
l'étape consistant à souder au laser les canaux (5) d'échangeur de chaleur à l'au moins un distributeur de fluide (8) et/ou à l'au moins un collecteur de fluide (10) comprend le soudage laser des canaux (5) d'échangeur de chaleur à l'au moins un distributeur de fluide (8) et/ou à l'au moins un collecteur de fluide (10) à travers l'au moins un distributeur de fluide (8) et/ou l'au moins un collecteur de fluide (10).
